# EUROPEAN PATENT APPLICATION

(11) **EP 1 426 858 A2**
(43) Date of publication of application: **09.06.2004**
(21) Application number: 03257643.1
(22) Date of filing: 04.12.2003
(51) Int. Cl.: G06F 9/44

(54) **Apparatus and method for the selection of displayed objects**

(30) Priority: 04.12.2002 JP 2002352647; 17.01.2003 JP 2003009681; 27.11.2003 JP 2003398046
(71) Applicant: CANON KABUSHIKI KAISHA, Tokyo (JP)
(72) Inventor: Matsubayashi, Kazuhiro c/o Canon Kabushiki Kaisha, Tokyo (JP); Maruyama, Kazuna c/o Canon Kabushiki Kaisha, Tokyo (JP); Shikata, Yasushi c/o Canon Kabushiki Kaisha, Tokyo (JP)
(74) Representative: Beresford, Keith Denis Lewis

(57) **Abstract**

In an information processing apparatus capable of receiving data and displaying objects, the convenience of display operation is improved. More specifically, an information processing apparatus for receiving data described in a markup language and including first hierarchical level elements delimited by predetermined tags and second hierarchical level elements which belong to a range delimited by the predetermined tags, and displaying the received data on a display device, includes a receiving unit for receiving key-input first and second signals, a switching unit for switching selection between the first hierarchical level elements or between the second hierarchical level elements when the first signal is received, and switching selection between the first and second hierarchical level elements when the second signal is received, and a selected element display unit for displaying the selected element on the display device. A desired display object can be selected by a few key input operations.

## Description

### FIELD OF THE INVENTION

The present invention relates to an information processing technique which receives data described in a markup language such as BML (Broadcast Markup Language) or HTML (Hyper Text Markup Language), lays out the received data, and displays the data on a display device.

### BACKGROUND OF THE INVENTION

BS data broadcasting started December, 2000 in Japan using BML as a data description language system for data broadcasting. When a viewer is viewing a data broadcasting program, a digital broadcasting receiver corresponding to BS data broadcasting stores BML data and monomedia data such as motion images, still images, and sounds in an internal memory, and presents the viewer with a data broadcasting image on the basis of these data. BML expresses a data structure by a markup language expanded for broadcasting on the basis of XHTML 1.0 (the extensible HyperText Markup Language 1.0).

Conventionally, information processing techniques for laying out data for data broadcasting described in such a markup language and displaying the data on a display device have been proposed.

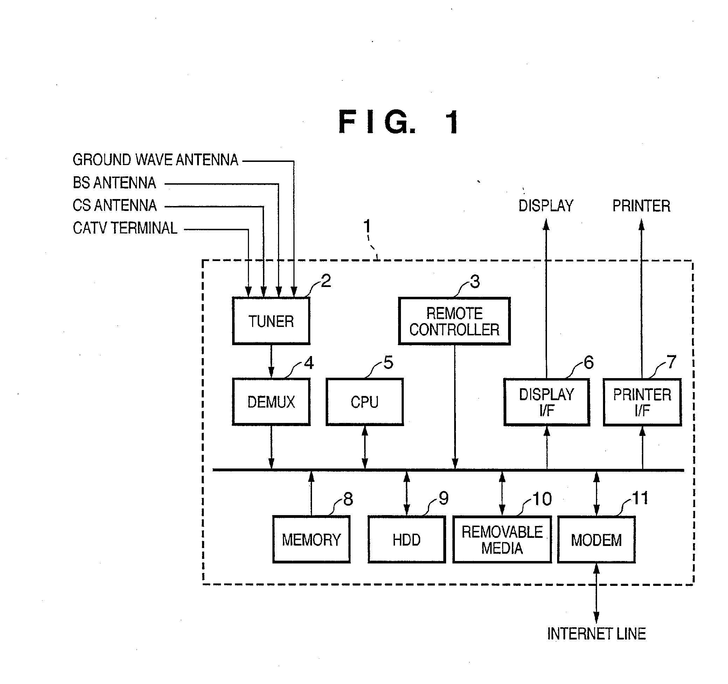

As an example, Fig. 1 shows a hardware block diagram of a digital broadcasting receiver corresponding to data broadcasting and digital television broadcasting.

Referring to Fig. 1, a receiver unit 1 performs data input/output, data processing, data storage, data communication, and the like. The receiver unit 1 can be connected to various antennas, a CATV terminal, a display, a printer, an Internet line, and the like. When a viewer selects a channel by a remote controller 3, received data of the desired channel is obtained by a tuner 2 from an input signal from an antenna or CATV terminal. In received data of one channel in digital television broadcasting, motion image data, sound data, and other code data are multiplexed. Therefore, a DEMUX 4 demultiplexes these data, and the data are stored in a memory 8. A CPU 5 performs decoding and some other processing for each data stored in the memory 8, and outputs images, sounds, and the like to a display via a display I/F 6.

The data stored in the memory 8 can also be recorded in an HDD (Hard Disk Drive) 9 or removable memory (e.g., a video tape or video disk) 10, or in an Internet server via a modem 11.

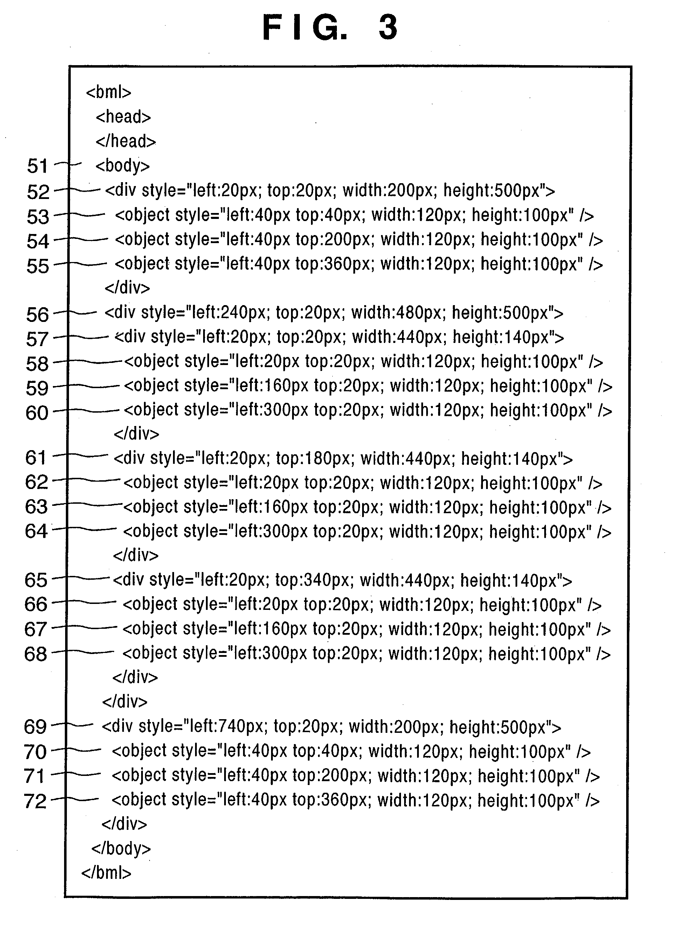

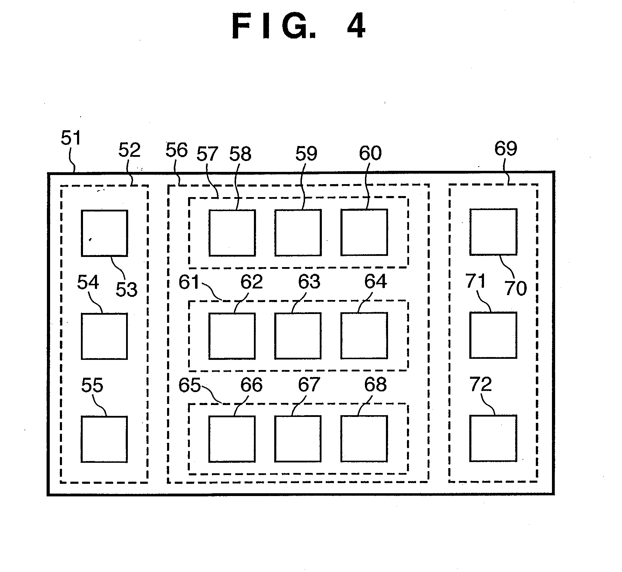

Also, in data broadcasting, data described in a markup language called BML (Broadcast Markup Language) as shown in Fig. 3 is transmitted. The receiver unit 1 analyzes this data and displays an image as shown in Fig. 4.

Generally, elements prepared by the BML include display elements and non-display elements. The display elements further include elements for designating regions, elements for displaying texts, and elements for displaying motion images and still images. Display objects such as texts and images to be displayed on the screen are displayed on the basis of the descriptions of the corresponding display elements. For example, elements 51 to 72 shown in Fig. 3 are displayed on the screen as display objects 51 to 72 shown in Fig. 4.

Unfortunately, the digital broadcasting receiver described above has no function of selecting an arbitrary displayed element (i.e., display object) by a key operation of a remote controller. If this function of selecting an arbitrary displayed element by a key operation is added, it is possible to store or output only a necessary display object. This extends the possibility of the secondary use of information. For example, if a function of selecting and printing only a necessary display object is added, the printing speed can be increased, and the ink can be saved.

This function of selecting an arbitrary displayed element by a key operation is already realized by DTP (Desk Top Publishing) of a conventional personal computer and the like. By pressing a predetermined key (a TAB key in the case of a personal computer), a user can switch elements to be selected in the order in which elements are described in data. A user can also switch elements to be selected in the reverse order by pressing another predetermined key (SHIFT + TAB in the case of a personal computer).

The application of the function of selecting an arbitrary displayed element by a key operation to the above-mentioned digital broadcasting receiver will be described below.

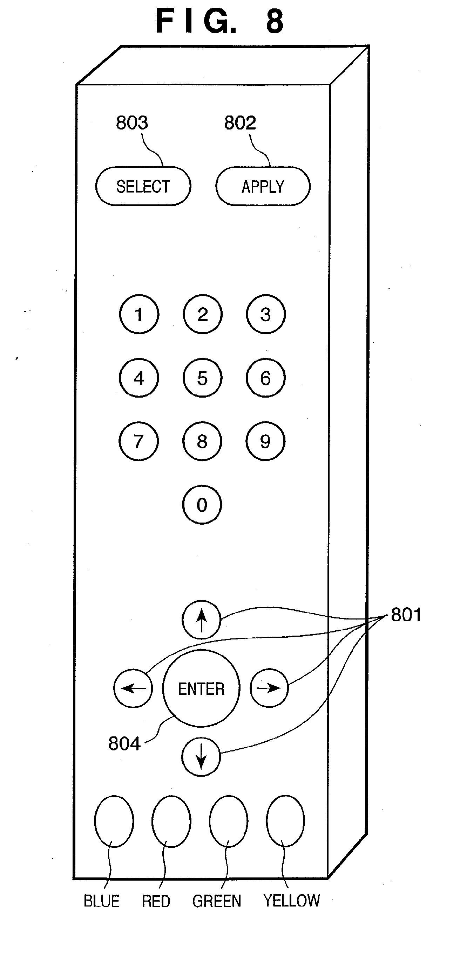

Fig. 8 is a view showing an example of a remote controller of the digital broadcasting receiver. This remote controller has a select key 803. An arbitrary element can be selected by setting a selection mode by pressing the select key 803.

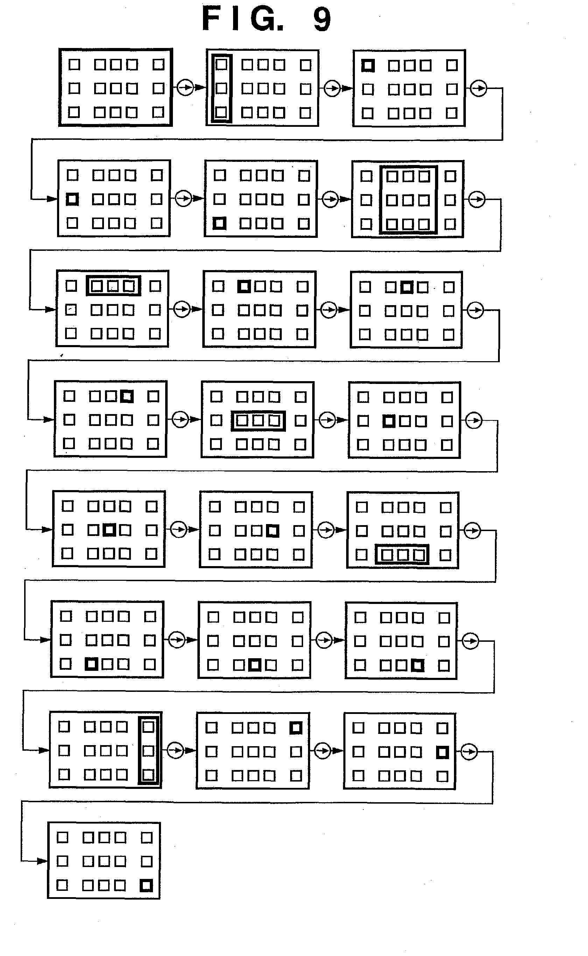

More specifically, to select an arbitrary element of BML data displayed as shown in Fig. 4 by using the remote controller shown in Fig. 8, a user presses arrow keys 801 of the remote controller in the selection mode. In this manner, the user can switch display objects to be selected as shown in Fig. 9 in accordance with the order in which elements are described in the BML data (Fig. 9 is a view showing the way display objects to be selected indicated by the thick lines are switched in accordance with key operations of the remote controller, in which arrows between the individual images correspond to the arrow keys 801 of the remote controller shown in Fig. 8).

The user can also set an application mode by pressing an apply key 802 of the remote controller shown in Fig. 8. In this mode, the user can activate an application to secondarily use information such as characters and images of selected display objects. Examples of the secondary use are enlarged display of display objects, editing of display objects, and printing of display objects.

As is apparent from the above description, however, to select elements in turn in the selection mode, the user must press the right arrow key of the remote controller about 20 times until the last element is selected. This selection requiring such a large number of key operations is inconvenient for the viewer.

In addition, the viewer performs the operation by monitoring the image as shown in Fig. 4 without directly viewing source data written in BML as shown in Fig. 3. Accordingly, the viewer is unable to know the order in which elements are described, and hence does not know how many remote controller key operations are necessary before a desired display object is displayed.

When a pointing device such as a mouse capable of direct designation on the screen is connected in addition to key input as in the case of a personal computer, display objects to be selected can be easily switched by performing a mouse operation in addition to key input. However, no pointing device is generally connected to the digital broadcasting receiver described above, so display objects to be selected must be switched only by key input. The above problem is particularly serious in a case like this. Therefore, it is essential to increase the efficiency of the selecting operation when the selecting function is to be added to the digital broadcasting receiver.

Also, the above example is based on the assumption that all display objects on the screen can be selected. However, BML data transmitted from a broadcasting station is not so set that all display elements are selectable. A display element contains information for designating the position of display, and information for designating the size (width and height) of a display object to be displayed. In addition, a display element contains attribute information (e.g., information indicating whether the corresponding display object is selectable, style information describing a display method indicating that the object is selected, and a script function (event handler) to be executed when the object is selected) necessary to allow the viewer to select the corresponding display object and execute predetermined processing. In BML data transmitted from a broadcasting station, this attribute information is set only for some of a plurality of display elements. That is, the digital broadcasting receiver for receiving BML data cannot select an arbitrary one of all display elements and perform arbitrary processing for the selected display element in the selection mode; the digital broadcasting receiver is merely permitted to select only display elements for which attribute information necessary for selection is set by the broadcasting station, and to perform predetermined processing for the selected display elements.

Accordingly, even when the digital broadcasting receiver having the selection mode and capable of selecting an arbitrary displayed element by a key operation of a remote controller as described above is prepared, a viewer cannot select an arbitrary display object and execute arbitrary processing. To add the selecting function to the digital broadcasting receiver, therefore, a function by which a viewer can freely set the expansion of objects to be selected and the variety of processes is desired.

Moreover, in addition to the case to receive a digital broadcasting by a digital broadcasting receiver, when the website also is browsed with the receiver with which a pointing device capable of directing objects displayed on the screen is not connected, a similar problem is caused.

### SUMMARY OF THE INVENTION

The present invention has been made in consideration of the above situation, and has as a concern to improve the convenience of an information processing apparatus capable of receiving data described in a markup language, and displaying objects.

More specifically, a desired display object can be selected in a displayed image by a few key input operations.

Also, all display objects on the screen can be selected, and arbitrary processing can be executed for a selected display object.

In one aspect, an information processing apparatus according to the present invention has the following arrangement.

That is, an information processing apparatus for receiving data described in a markup language and including first hierarchical level elements delimited by predetermined tags and second hierarchical level elements which belong to a range delimited by the predetermined tags, and displaying the received data on a display device, comprising
receiving unit adapted to receive key-input first and second signals,
switching unit adapted to switch selection between the first hierarchical level elements or between the second hierarchical level elements when the first signal is received, and switching selection between the first and second hierarchical level elements when the second signal is received.

In another aspect an information processing apparatus according to the present invention has the following arrangement.

That is, an information processing apparatus for receiving data described in a markup language, and displaying an object on a display device, comprising
searching unit adapted to search the received data for a display element described as a selectable display object,
attribute information adding unit adapted to add, to the display element found by the searching unit, attribute information indicating whether the element is selectable, and
display unit adapted to display, on the display device, the data to which the attribute information is added, in the form of an object.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

The accompanying drawings, which are incorporated in and constitute a part of the specification, illustrate embodiments of the invention and, together with the description, serve to explain the principles of the invention.
Fig. 1 is a hardware block diagram of a typical digital broadcasting receiver;
Fig. 2 is a functional block diagram of a digital broadcasting receiver according to the first embodiment of the present invention;
Fig. 3 is a view showing an example of data for data broadcasting described in BML;
Fig. 4 is a view showing an example of an image in which the data for data broadcasting described in BML is laid out;
Fig. 5 is a view showing an example of an image when display objects displaying child elements has the same background color as that of a display object displaying a parent element and hence cannot be seen;
Fig. 6 is a view showing an example of an image of display objects in which selected elements are highlighted;
Fig. 7 is a view showing an example of an image of display objects in which selected elements and their brother elements are highlighted;
Fig. 8 is a view showing an example of a remote controller of a digital broadcasting receiver;
Fig. 9 is a view showing the way display objects to be selected indicated by the thick lines are switched in accordance with a remote controller operation in a conventional digital broadcasting receiver;
Fig. 10 is a view showing examples of image switching when arrow keys are operated from an image of display objects in which selected elements are highlighted;
Fig. 11 is a view showing examples of image switching when arrow keys are operated from an image of display objects in which selected elements and their brother elements are highlighted;
Fig. 12 is a view showing the way display objects to be selected are switched in the digital broadcasting receiver according to the first embodiment of the present invention;
Fig. 13 is a view showing the transition of the selected state caused by operations of up, down, left, and right arrow keys;
Fig. 14 is a flow chart showing the operation of a selection mode in the digital broadcasting receiver according to the first embodiment of the present invention;
Fig. 15 is a view showing an example of an image of display objects in which selectable elements are highlighted;
Fig. 16 is a view showing an example of an image of display objects when an element which cannot be selected is present;
Fig. 17 is a functional block diagram of a digital broadcasting receiver according to the second embodiment of the present invention;
Fig. 18 is a view showing an example of data for data broadcasting described in BML;
Fig. 19 is a view showing the way the data for data broadcasting described in BML is displayed;
Fig. 20 is a view showing an example of a remote controller of a digital broadcasting apparatus;
Fig. 21 is a view showing the transition of selected display objects when a right arrow key is pressed while elements are not sorted in descending order of area;
Fig. 22 is a view showing the way selected display objects are switched by pressing a right arrow key in a digital broadcasting apparatus according to the third embodiment of the present invention;
Fig. 23 is a view showing an example of a box model;
Fig. 24 is a view showing the way display objects are displayed together with numbers each indicating the order of sort;
Fig. 25 is a view showing the way display objects are displayed in different colors on the basis of the order of sort;
Fig. 26 is a view showing the BML document data shown in Fig. 18 in the form of a tree structure;
Fig. 27 is a view showing the BML document data in the form of a tree structure when some selectable elements are sorted;
Fig. 28 is a flow chart showing the operation of a selection mode in the digital broadcasting receiver according to the third embodiment of the present invention;
Fig. 29 is a functional block diagram of a digital broadcasting apparatus according to the eighth and ninth embodiments of the present invention;
Fig. 30 is a flow chart showing the processing of a focusing information addition unit 2924 in the eighth embodiment of the present invention;
Fig. 31 is a flow chart showing the processing of a focusing information addition unit 2924 in the ninth embodiment of the present invention;
Fig. 32 is a functional block diagram of a digital broadcasting receiver according to the 10th embodiment of the present invention;
Fig. 33 is a view showing an example of a data broadcasting image;
Fig. 34 is a view showing a display example of a pointer 3401 on the data broadcasting image;
Fig. 35 is a flow chart showing the processing of a display object extracting unit 3248 when an enter key of a remote controller is pressed;
Fig. 36 is a view showing the way a display object is selected;
Fig. 37 is a functional block diagram of a digital broadcasting receiver according to the 11th embodiment of the present invention;
Fig. 38 is a flow chart showing the processing of a display object extracting unit 3758 when an arrow key of a remote controller is pressed;
Fig. 39 is a view showing an example of display object search performed by the display object extracting unit 3758;
Fig. 40 is a view showing an example of the movement of a pointer; and
Fig. 41 is a view showing another example of the movement of the pointer.

### DETAILED DESCRIPTION OF THE PREFERRED EMBODIMENTS

Preferred embodiments of the present invention will now be described in detail in accordance with the accompanying drawings.

As a general rule in the following description, an "element" means a unit which forms BML data, and a "display object" means a group form of elements in BML data when they are displayed on the screen.

### [First Embodiment]

As an information processing apparatus for laying out data for data broadcasting described in a markup language and displaying objects, this embodiment uses the hardware of a typical digital broadcasting receiver shown in Fig. 1 as in the prior art.

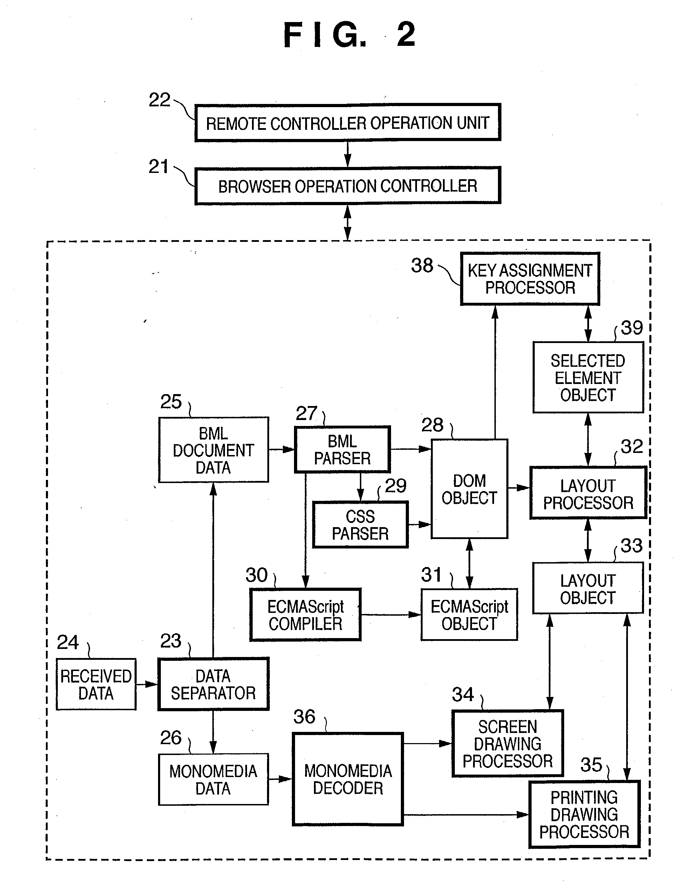

The operation of a process of displaying data for data broadcasting performed by the digital broadcasting receiver according to this embodiment will be explained below with reference to a functional block diagram shown in Fig. 2.

A browser operation controller 21 controls the operation of each processor described below, in accordance with key input from a remote controller operation unit 22 or in accordance with some other event.

A data separator 23 separates received data 24 into BML document data 25 (text data) and monomedia data 26 (binary data).

A BML parser 27 interprets the BML document data and stores the data as a DOM object 28.

A CSS parser 29 interprets CSS (Cascading Style Sheets) contained in the BML document data, and stores the CSS as the DOM object 28.

An ECMAScript compiler 30 compiles ECMAScript contained in the BML document data, and stores the compiled data as an ECMAScript object 31. The ECMAScript object 31 can change the contents of the DOM object 28.

A layout processor 32 lays out the BML document data on the basis of the information of the DOM object 28, and stores the data as a layout object 33.

A screen drawing processor 34 and printing drawing processor 35 perform drawing for the screen and a printer, respectively, on the basis of the information of the layout object 33. During the processing, still images and motion images decoded by a monomedia decoder 36 are synthesized.

The foregoing is the conventional process of displaying data for data broadcasting performed by the digital broadcasting receiver. The following processing is further added to the display process performed by the digital broadcasting receiver according to this embodiment.

When a user presses a select key 803 of a remote controller shown in Fig. 8, a selection mode is set, and the following processing is made effective. If the remote controller does not have the select key 803, the user can also set the selection mode by selecting a menu on the screen.

Of the elements forming the BML document data, elements (display elements) which can be displayed on the screen are body, object, div, p, input, span, and a. Since other elements (non-display elements) are not displayed on the screen, they cannot be selected and hence are not objects of this embodiment.

Also, if the visibility characteristic of CSS is set to hidden (invisible), even the displayable elements enumerated above are not displayed on the screen and hence cannot be selected.

Furthermore, even an element to be displayed on the screen cannot be selected if an attribute which does not permit selection in order to inhibit secondary use is added to the element. Objects of the following processing are only selectable elements.

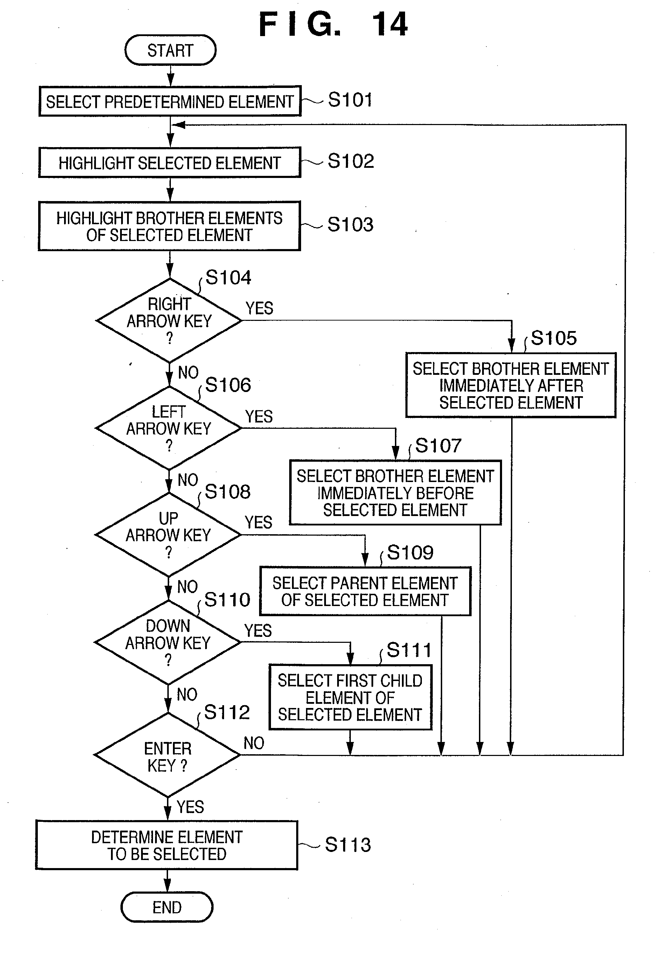

The processing in the selection mode will be explained with reference to a flow chart shown in Fig. 14. In step S101, a predetermined element is selected. Normally, a root element (a body element in BML document data) is selected in the initial state.

In step S102, a selected element object 39 is highlighted by the layout processor 32.

In step S103, all brother elements (elements in the same hierarchical level) of the selected element object 39 are highlighted. This highlighted display of the brother elements can be distinguished from the highlighted display of the selected element object 39 itself.

If a right arrow key of the remote controller is pressed in step S104, the flow advances to step S105. In step S105, a key assignment processor 38 selects that one of the brother elements of the currently selected element, which is immediately behind the currently selected element, as a new selected element object 39.

If a left arrow key of the remote controller is pressed in step S106, the flow advances to step S107. In step S107, the key assignment processor 38 selects that one of the brother elements of the currently selected element, which is immediately before the currently selected element, as a new selected element object 39.

If an up arrow key of the remote controller is pressed in step S108, the flow advances to step S109. In step S109, the key assignment processor 38 selects a parent element (an element in a hierarchical level immediately above) of the currently selected element as a new selected element object 39.

If a down arrow key of the remote controller is pressed in step S110, the flow advances to step S111. In step S111, the key assignment processor 38 selects a child element (an element in a hierarchical level immediately below) of the currently selected element as a new selected element object 39.

If an enter key 804 of the remote controller is pressed in step S112, the flow advances to step S113 to determine and output the selected element object 39. The selected element object 39 can acquire information such as characters and images by looking up information obtained from the DOM object 28 and layout object 33 in relation to the corresponding element. Accordingly, these characters and images can be secondarily used, e.g., displayed in an enlarged scale, edited, or printed.

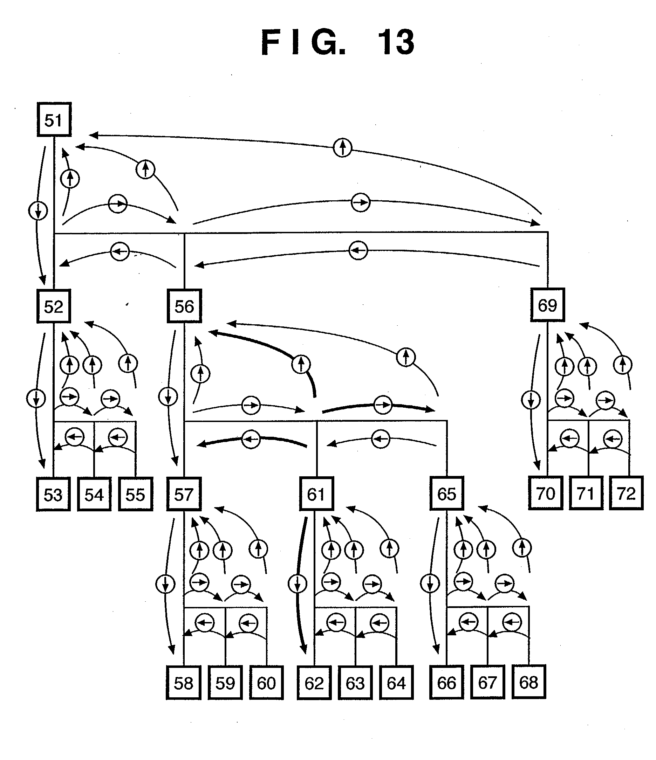

Fig. 13 is a view showing the transition of the selected state caused by operations of the up, down, left, and right arrow keys in the tree structure of the BML document data shown in Fig. 3. The key assignment processor 38 assigns the left or right allow key to move to the left or right (brother element), respectively, in the tree, assigns the up arrow key to move up in the tree, and assigns the down key to move down in the tree.

In this embodiment as described above, a desired element can be effectively selected by a few key operations by assigning a key for switching the selected element to a brother element (an element in the same hierarchical level), a key for switching the selected element to a parent element (an element in a hierarchical level immediately above), and a key for switching the selected element to a child element (an element in a hierarchical level immediately below).

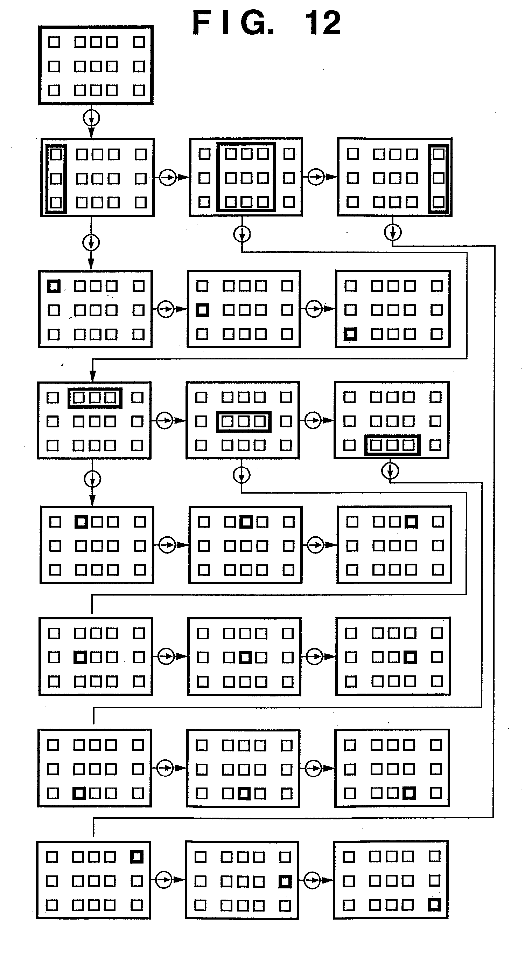

For example, Fig. 12 is a view showing the way display objects to be selected are switched in the same BML document data as shown in Fig. 9. Referring to Fig. 9, a maximum of twenty-one key operations are necessary from the state in which a body element is selected. In contrast, a maximum of only eight operations are necessary in Fig. 12.

Also, in this embodiment, the highlighted display of brother elements of a selected element can be distinguished from the highlighted display of the selected element itself. Therefore, a user can understand that he or she need only press the down arrow key to select an element inside the selected element, the right or left arrow key to select a brother element or an element inside a brother element, or the up arrow key to select some other element. This effectively allows a user to find a key to be pressed to select a desired element.

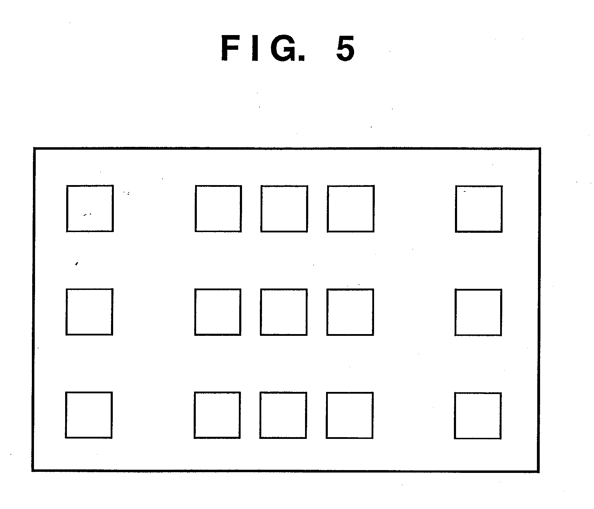

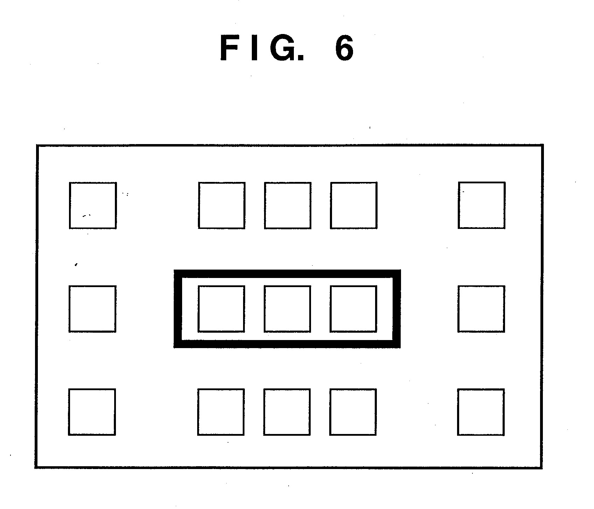

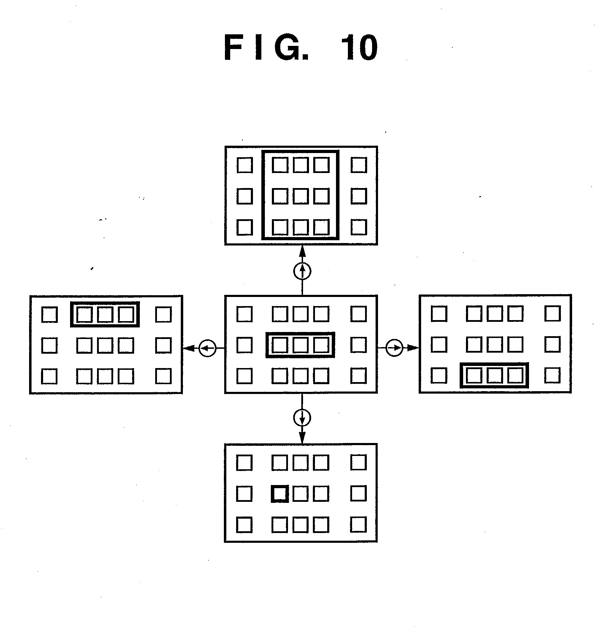

For example, if the background color of display objects displaying elements 52, 56, 57, 61, 65, and 69 indicated by the broken lines is the same as the background color of a display object displaying a parent element, elements are displayed as shown in Fig. 5. If the element 61 is selected in this case, a display object 61 is highlighted as shown in Fig. 6. When a user operates the up, down, left, and right arrow keys from the displayed image shown in Fig. 6, display objects to be selected are switched as shown in Fig. 10. However, the user cannot know, only by watching the image shown in Fig. 6, which key is to be pressed next to select a desired display object in the image shown in Fig. 6.

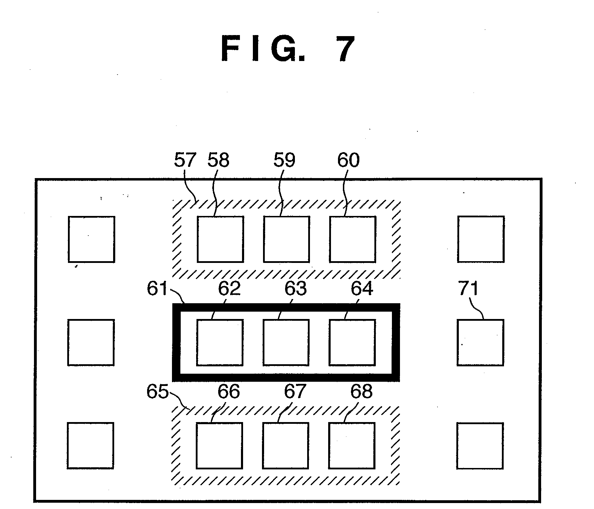

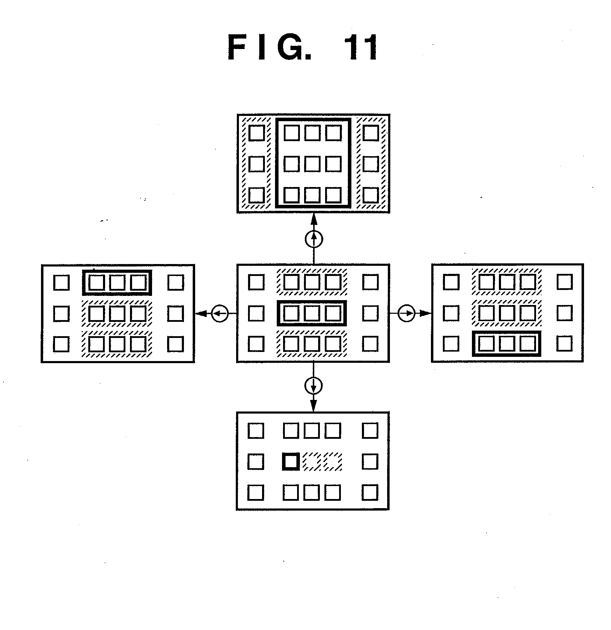

If the elements 57 and 65 as brother elements of the element 61 are highlighted as shown in Fig. 7, the user can understand that he or she need only press the down arrow key to select child elements 62, 63, and 64 inside the selected element 61, the right or left arrow key to select the brother element 57 or 65 or child elements 58, 59, and 60, or 66, 67, and 68 inside the brother element, or the up arrow key to select some other element. When the user operates the up, down, left, and right arrow keys from the image shown in Fig. 7, selected elements are switched as shown in Fig. 11.

### [Second Embodiment]

In this embodiment, selectable elements are so displayed as to be distinguished from other elements.

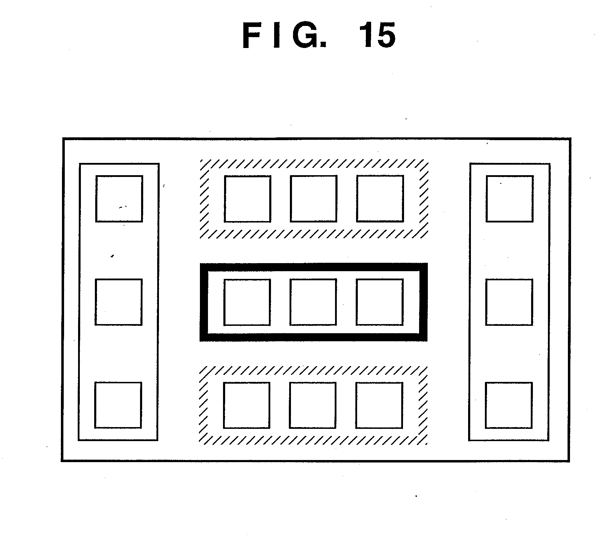

For example, if elements 52, 56, 57, 61, 65, and 69 indicated by the broken lines in Fig. 4 have the same background color as that of a parent element and hence cannot be seen, these elements are displayed as shown in Fig. 7 in the above first embodiment. In this embodiment, however, invisible display objects are also highlighted as shown in Fig. 15.

This allows a user to confirm the tree structure of the elements on the screen, so he or she can estimate a procedure to follow until a desired display object is selected.

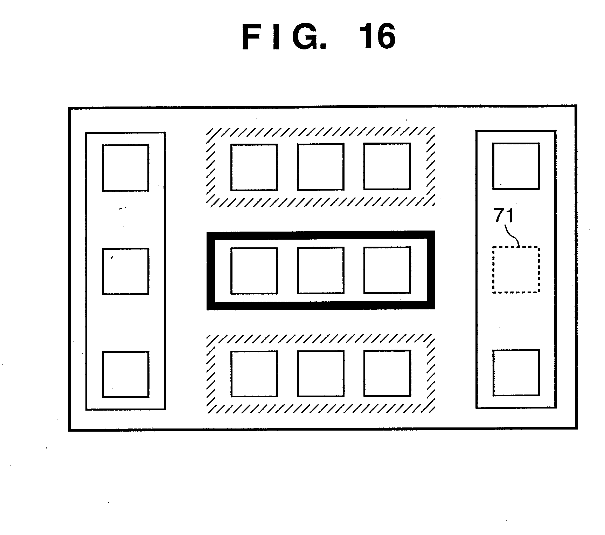

Also, an element to which an attribute which permits no selection in order to inhibit secondary use is added is not highlighted. This effectively prevents a user from performing an unnecessary operation to select an element which cannot be selected. For example, if an attribute which permits no selection is added to an element 71 shown in Fig. 4, an image is displayed as shown in Fig. 16.

### [Third Embodiment]

In the above first and second embodiments, brother elements to be selected or parent and child elements to be selected are switched in accordance with pressed arrow keys. However, the present invention is not limited to these embodiments. In the third embodiment, elements to be selected are switched in accordance with the areas of these elements.

This embodiment uses the hardware of a typical digital broadcasting receiver shown in Fig. 1 as in the prior art.

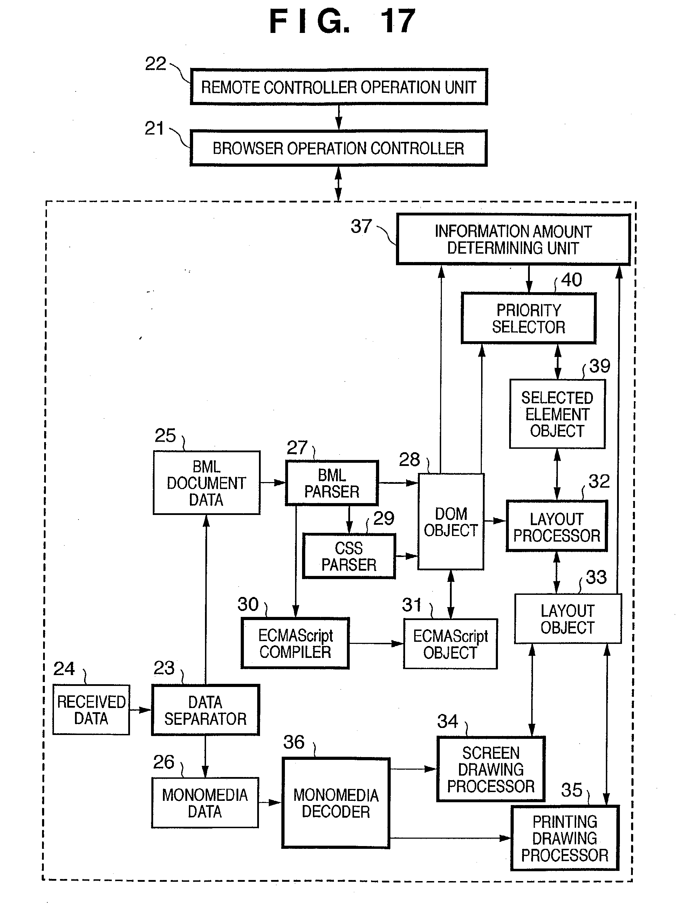

The operation of a process of displaying data for data broadcasting performed by the digital broadcasting receiver according to this embodiment will be explained below with reference to a functional block diagram shown in Fig. 17.

A browser operation controller 21 controls the operation of each processor described below, in accordance with key input from a remote controller operation unit 22 or in accordance with some other event.

A data separator 23 separates received data 24 into BML document data 25 (text data) and monomedia data 26 (binary data).

A BML parser 27 interprets the BML document data and stores the data as a DOM object 28.

A CSS parser 29 interprets CSS (Cascading Style Sheets) contained in the BML document data, and stores the CSS as the DOM object 28.

An ECMAScript compiler 30 compiles ECMAScript contained in the BML document data, and stores the compiled data as an ECMAScript object 31. The ECMAScript object 31 can change the contents of the DOM object 28.

A layout processor 32 lays out the BML document data on the basis of the information of the DOM object 28, and stores the data as a layout object 33.

A screen drawing processor 34 and printing drawing processor 35 perform drawing for the screen and a printer, respectively, on the basis of the information of the layout object 33. During the processing, still images and motion images decoded by a monomedia decoder 36 are synthesized.

The foregoing is the conventional process of displaying data for data broadcasting performed by the digital broadcasting receiver. The following processing is further added to the display process performed by the digital broadcasting receiver according to this embodiment.

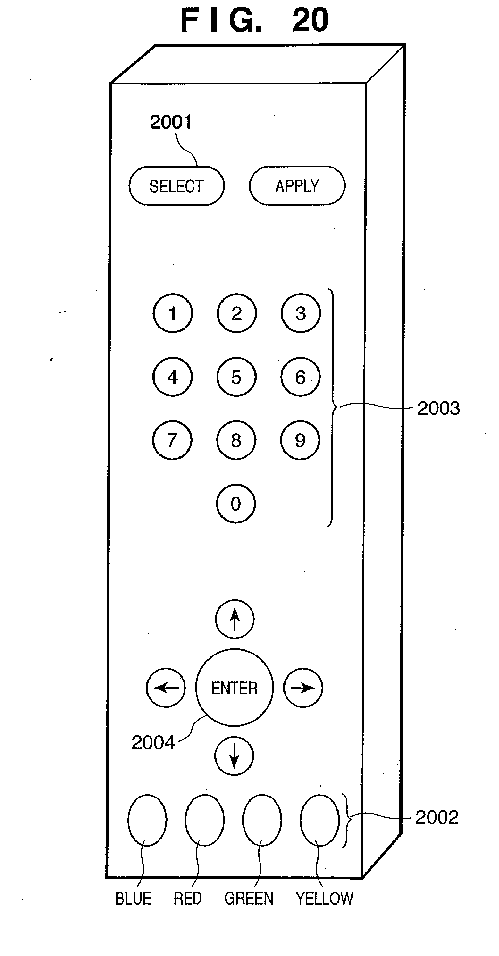

When a user presses a select key 2001 of a remote controller shown in Fig. 20, a selection mode is set, and the following processing is made effective. If the remote controller does not have the select key 2001, the user can also set the selection mode by selecting a menu on the screen.

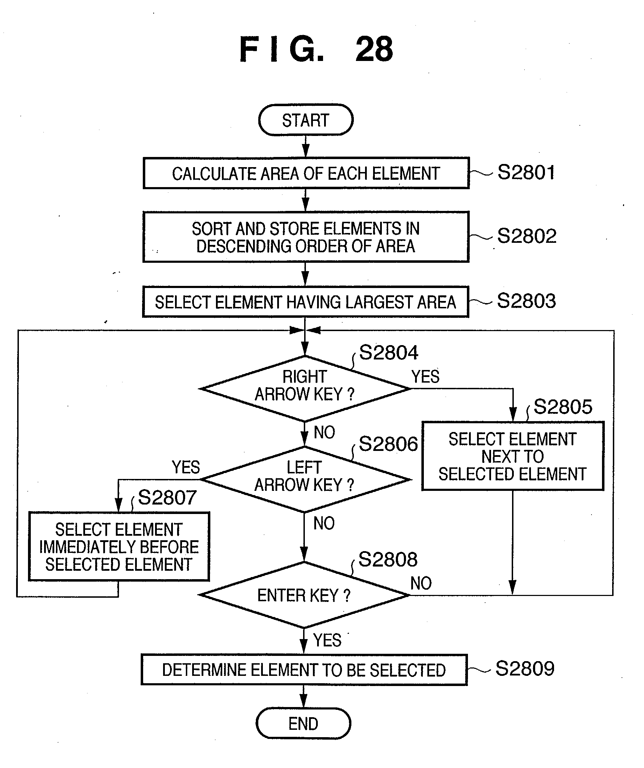

The processing in the selection mode will be explained with reference to a flow chart shown in Fig. 28.

Generally, a display object occupying a large area on the screen contains a large amount of information. Therefore, the value of secondary use presumably has a correlation with the area of a display object on the screen.

In step S2801, an information amount determining unit 37 calculates the area of each element of the BML document data on the screen. As this area, it is possible to use information read out from the DOM object 28 or information read out from the layout object 33.

Of the elements forming the BML document data, elements (display elements) which can be displayed on the screen are body, object, div, p, input, span, and a. Since other elements (non-display elements) are not displayed on the screen, they cannot be selected and hence are not objects of this embodiment.

Also, if the visibility characteristic of CSS is set to hidden (invisible), even the displayable elements enumerated above are not displayed on the screen and hence cannot be selected. Objects of the following processing are only selectable elements.

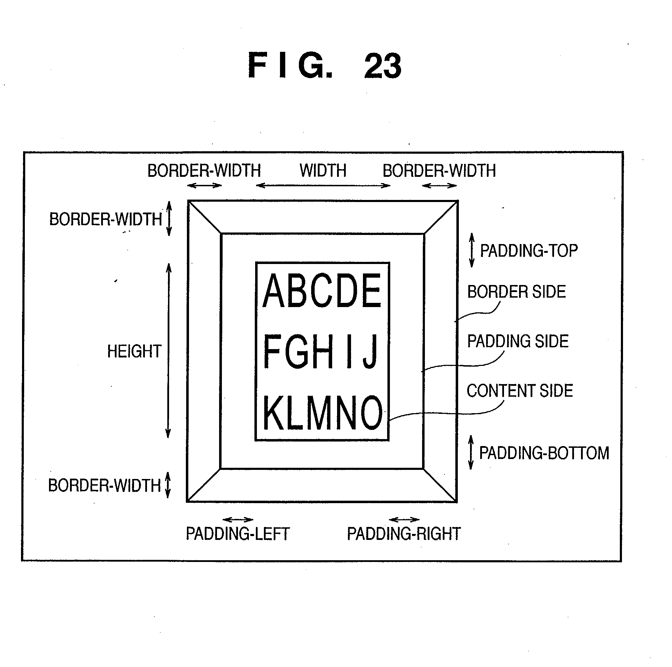

The individual elements are laid out on the basis of a box model shown in Fig. 23. Referring to Fig. 23, border-width, padding-left, padding-top, padding-right, padding-bottom, width, and height are the calculated values of CSS characteristics given to these elements by cascading.

In this embodiment, the area of a display object is defined as an area surrounded by a rectangle called border sides in Fig. 23.

If the contents of the DOM object 28 are changed by execution of ECMAScript, the layout of the displayed image sometimes changes, and the area of a display object changes accordingly. The information amount determining unit 37 can determine the information amount of a display object by reflecting the latest image layout, by looking up the latest DOM object 28 or layout object 33.

In step S2802, a priority selector 40 sorts all selectable elements contained in the BML document data in order of area, and stores the order.

In step S2803, a display object having the largest area is regarded as an initially selected display object, and stored as a selected element object 39. The selected element object 39 is highlighted by the layout processor 32.

If a right arrow key of the remote controller is pressed in step S2804, the flow advances to step S2805. In step S2805, the priority selector 40 selects an element immediately after the currently selected element in the sort order as a new selected element object 39, and highlights this element.

If a left arrow key of the remote controller is pressed in step S2806, the flow advances to step S2807. In step S2807, the priority selector 40 selects an element immediately before the currently selected element in the sort order as a new selected element object 39, and highlights this element.

If an enter key 2004 of the remote controller is pressed in step S2808, the selected element object 39 is determined and output. The selected element object 39 can acquire information such as characters and images by looking up information obtained from the DOM object 28 and layout object 33 in relation to the corresponding element. Accordingly, these characters and images can be secondarily used, e.g., displayed in an enlarged scale, edited, or printed.

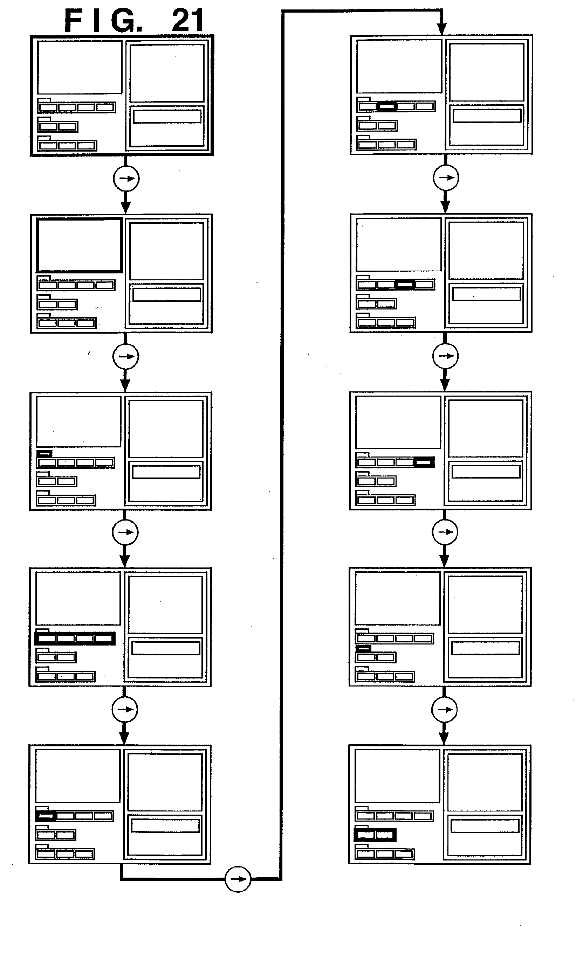

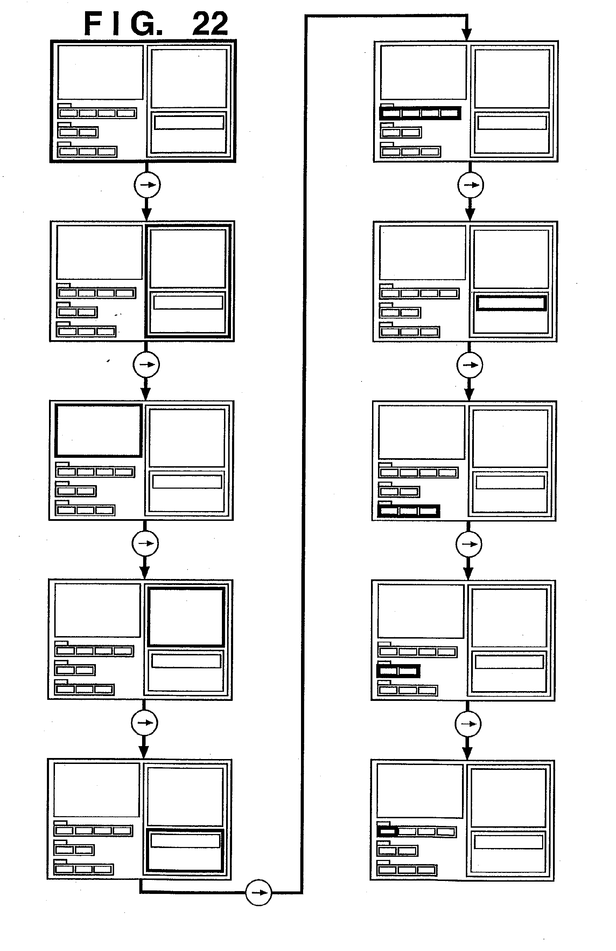

In this embodiment as described above, if key input is performed, display objects are selected in turn in descending order of area as shown in Fig. 22. Therefore, it is highly likely that a display object having a high secondary use value is selected by a few key input operations (in comparison, Fig. 21 shows display objects displaying selected elements when the right arrow key is pressed, while these elements are not sorted in descending order of area).

Also, if a viewer knows the specification that display objects are selected in descending order of area, he or she can roughly predict the order of selection of display objects while watching the display.

### [Fourth Embodiment]

In the above third embodiment, elements are sorted in descending order of display object area. However, an information amount determining unit 37 shown in Fig. 17 can also determine the information amount of an element in accordance with a factor other than the area of the element.

For example, since an element containing a large number of characters generally contains a large amount of information, the value of secondary use probably has a correlation with the number of characters contained in an element.

Alternatively, in the case of image data such as JPEG or PNG, an element containing a large number of bytes often contains a large amount of information. Therefore, the value of secondary use presumably has a correlation with the number of bytes of data contained in an element.

The above-mentioned factors; i.e., the area of an element on the screen, the number of characters contained in an element, and the number of bytes of data contained in an element can be singly determined. However, it is also possible to weight, where necessary, numerical values calculated from a plurality of factors, and use the total value of these weighted values. Furthermore, factors other than the three factors described above can also be combined.

Also, a viewer who often secondarily uses text data can increase the weighting of the number of characters contained in an element, and a viewer who often secondarily uses image data can increase the weighting of the number of bytes of data contained in an element. This setting can further decrease the number of key input operations by reflecting the way each viewer uses data.

If an attribute for inhibiting the secondary use is added to an element, it is also possible to skip this element whose secondary use is inhibited, and select the next element.

### [Fifth Embodiment]

In the third and fourth embodiments described above, elements are selected by using only the right and left arrow keys of the remote controller. The fifth embodiment uses other keys.

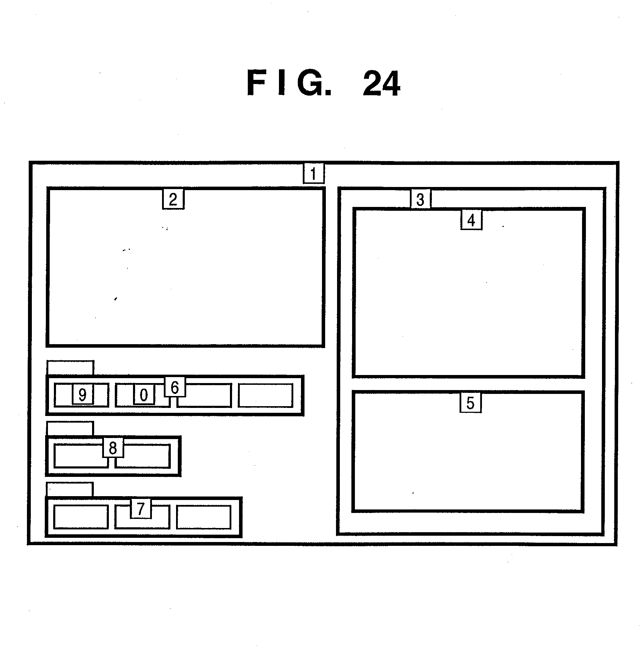

That is, numerical keys 1, 2, 3, 4, 5, 6, 7, 8, 9, and 0 (2003) are assigned to first to tenth elements as results of sorting performed by a priority selector 40 shown in Fig. 17 as in the third embodiment, and these numerals are displayed in one-to-one correspondence with display objects as shown in Fig. 24. In the image shown in Fig. 24, when a user presses a certain numerical key, the corresponding display object is selected at once.

If a desired element does not exist within the first ten elements, the next ten elements, i.e., the 11th to 20th elements, the 21st to 30th elements, and so on, are displayed whenever a right arrow key is pressed.

In this embodiment, elements are sorted in descending order of a correlation with the value of secondary use. Therefore, a desired element is highly likely to exist within the first ten elements. This extremely increases the possibility that the element is selected at once.

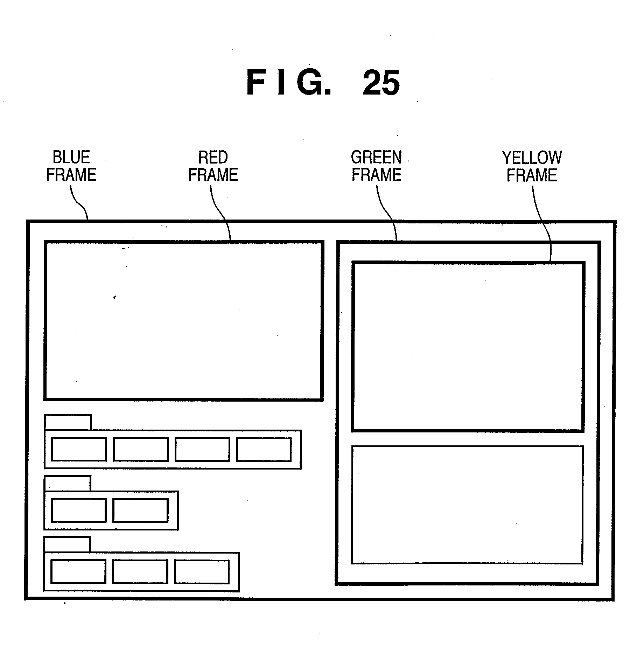

Also, as shown in Fig. 25, it is possible to display blue, red, green, and yellow frames for the first to fourth elements as results of sorting, and select a desired element at once by pressing a corresponding color key of keys 2002 of a remote controller shown in Fig. 20. In this example, the number of display objects selectable at once is smaller than in the above example. However, an image displayed on the screen is effectively simplified since no numerals need be displayed.

### [Sixth Embodiment]

In the above third to fifth embodiments, all selectable elements are sorted. In the sixth embodiment, partial sorting will be explained.

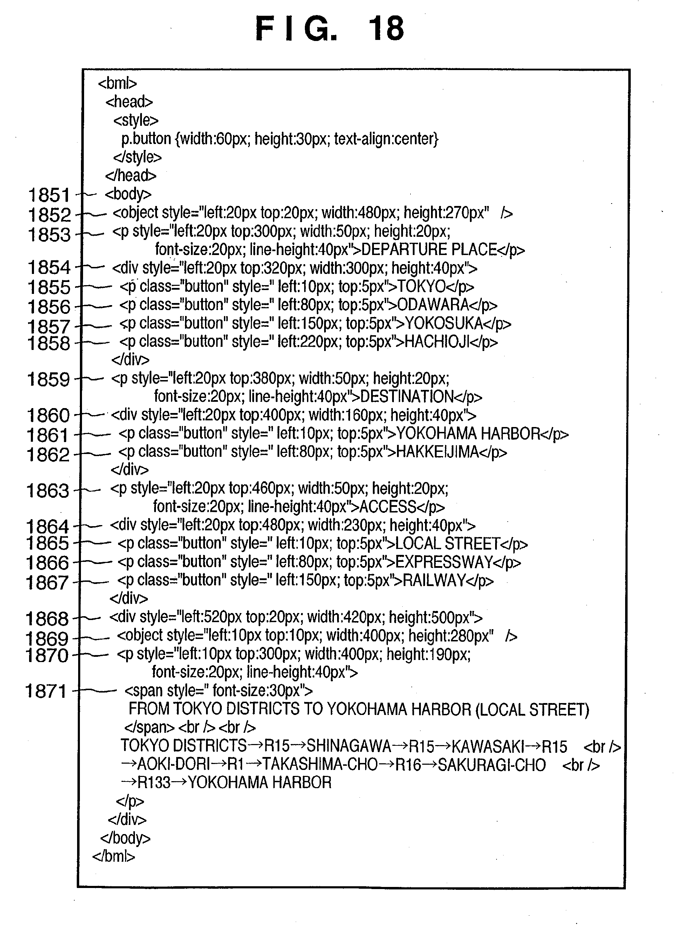

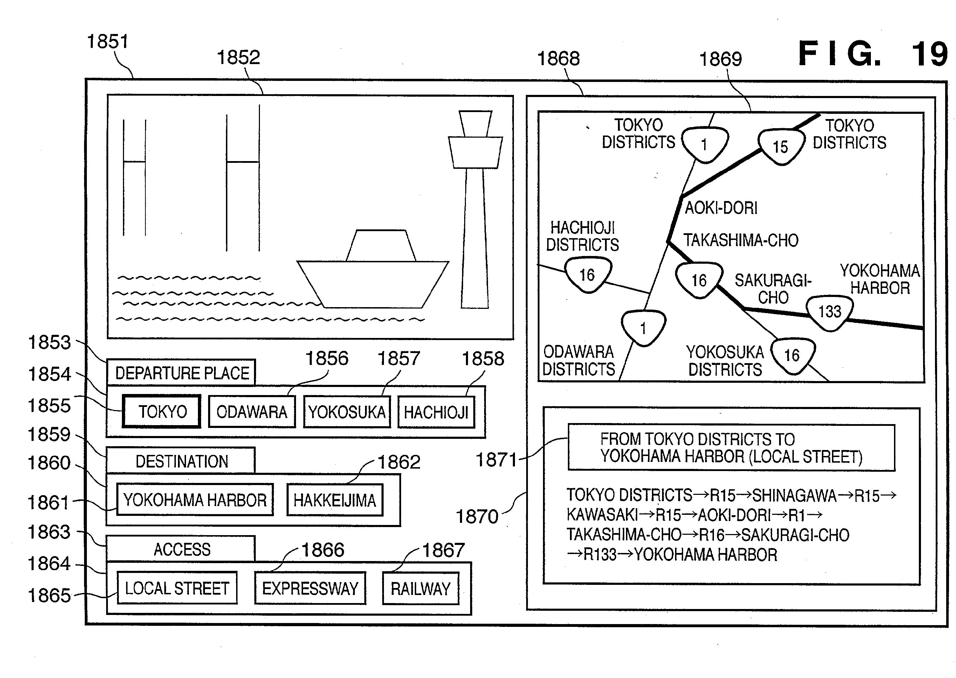

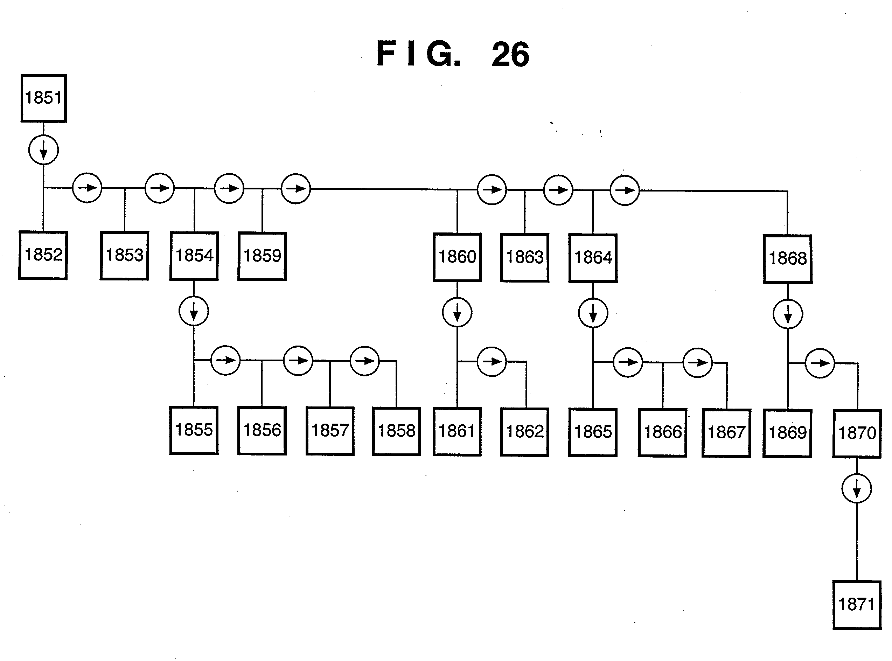

Fig. 26 is a view showing the BML document data shown in Fig. 18 in the form of a tree structure. Numbers 1851 to 1871 denote elements 1851 to 1871 shown in Figs. 18 and 19. In this example, a next brother element is selected by a right arrow key, and a child element is selected by a down arrow key. Although not shown, an immediately preceding brother element is selected by a left arrow key, and a parent element is selected by an up arrow key.

Each element can be selected by a relatively few key input operations by thus using the up, down, left, and right arrow keys.

Furthermore, in this embodiment, brother elements to be selected by the right arrow key are sorted in descending order of display object area.

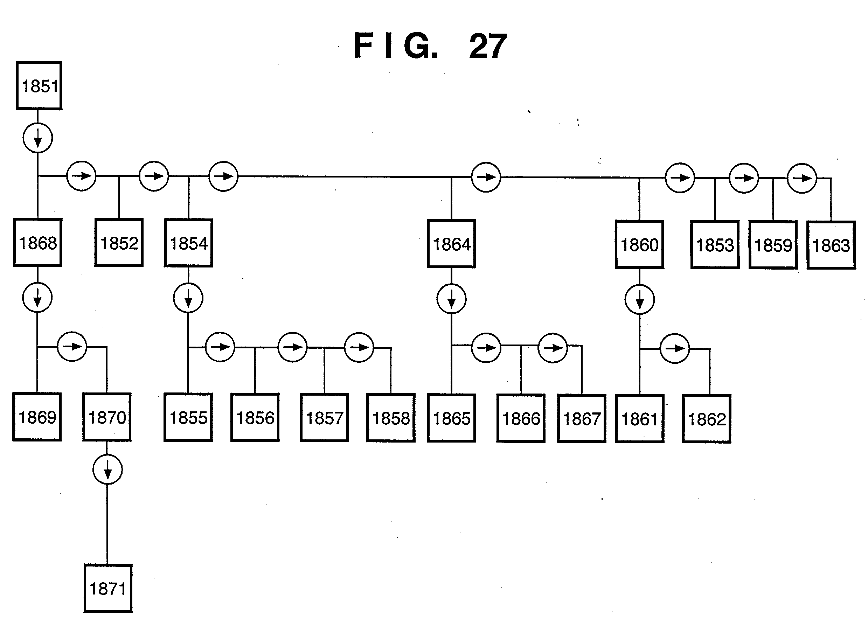

That is, the brother elements 1852, 1853, 1854, 1859, 1860, 1863, 1864, and 1868 are sorted in descending order of display object area, and their child elements 1855 to 1858, 1861, 1862, 1865 to 1867, and 1869 to 1871 are excluded from objects of sorting. Accordingly, the brother elements are sorted in descending order of area, so whenever the right arrow key is pressed these brother elements are selected in turn in descending order of display object area. As a consequence, the individual elements are selected by procedures shown in Fig. 27.

In this embodiment as described above, a display object having a high secondary use value can be selected by a few key input operations as indicated by the procedures shown in Fig. 22. In addition, any display object can be selected by a relatively few key input operations as indicated by the procedures shown in Fig. 26.

### [Seventh Embodiment]

The first to sixth embodiments have been explained by taking a digital broadcasting receiver as an example. However, the present invention can be implemented by any information processing apparatus displaying contents described in a markup language. Examples are a personal computer, portable information terminal, cell phone, and car navigation system.

In an apparatus including a pointing device such as a mouse or pen, a display object displayed on the screen can be selected relatively easily by directly pointing the object. However, in an apparatus having no such pointing device, a display object must be selected by key input. The significance of the present invention capable of reducing the number of key input operations is large in such an apparatus.

### [Eighth Embodiment]

In the first to seventh embodiments described above, the convenience of a digital broadcasting apparatus is improved by increasing the efficiency of the selecting operation. On and after the eighth embodiment, attribute information of broadcasting data to be transmitted is rewritten to extend objects of selection and realize a variety of processes concerning selected display objects, thereby improving the convenience of a digital broadcasting apparatus. In the following explanation, selecting a display object or explicitly showing a selected object (display object) on the screen will be referred to as "focusing".

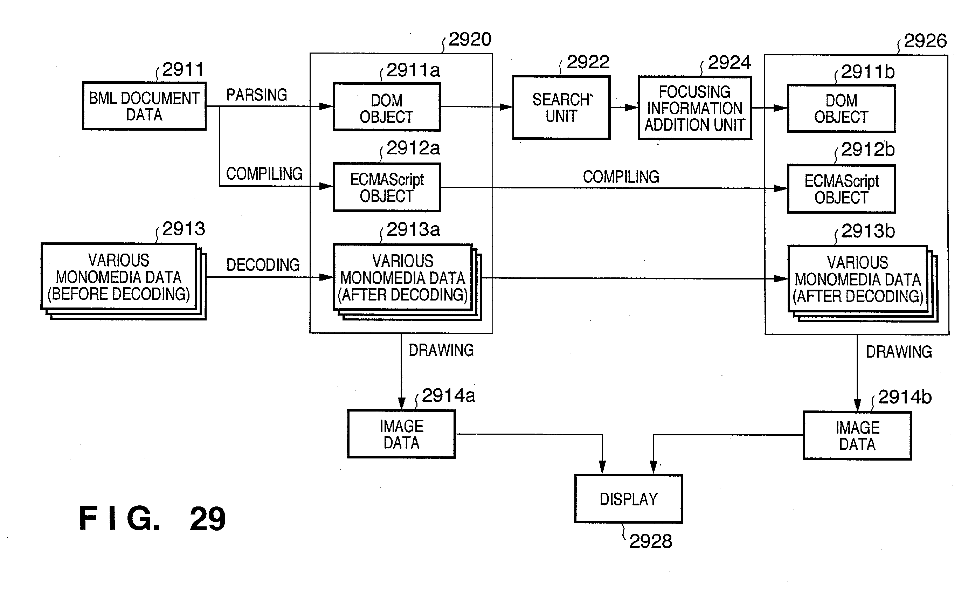

Fig. 29 is a functional block diagram of a digital broadcasting receiver according to this embodiment. Data shown in Fig. 29 is obtained by separating only data for use in data broadcasting from digital broadcasting data such as an MPEG stream and program information (EPG). The data for data broadcasting includes BML document data 2911 and various monomedia data 2913. The BML document data 2911 contains style data described in CSS (Cascading Style Sheet) and script data described in ECMAScript.

After being parsed, the BML document data 2911 is stored as object data (DOM object data) 2911a in an internal memory 2920. At the same' time, the style data described in CSS is also stored in the internal memory 2920. Only the script data described in ECMAScript is once compiled and then stored as object data (ECMAScript object data) 2912a in the internal memory 2920.

Simultaneously, the various monomedia data 2913 are decoded by corresponding decoders (not shown), and decoded monomedia data 2913a are stored in the internal memory 2920.

A normal data broadcasting program performs a drawing process by using these data stored in the internal memory 2920, and forms image data 2914a. The formed image data 2914a is transferred to a display 2928 and presented as a data broadcasting image to a viewer.

In this embodiment, when the above-mentioned data are stored in the internal memory 2920 or when a predetermined remote controller input signal is received from a viewer after the data are stored, the decoded monomedia data 2913a are copied from the internal memory 2920, and the copies (monomedia data 2913b) are stored in a storage unit 2926. At the same time, the DOM object data 2911a is copied from the internal memory 2920 and transferred to a search unit 2922. A recording medium of the storage unit 2926 is, e.g., a magnetic tape, semiconductor memory, optical disk and/or magnetic disk.

The search unit 2922 extracts elements which can be focused from the DOM object data 2911a. In BML, elements which can be focused are div elements, p elements, object elements, input elements, span elements, anchor elements, and the like. Search methods are a method of searching these elements in order of appearance in BML document data, and a method of searching each of these elements. The DOM object data 2911a is accessed in accordance with DOM-API defined in a data broadcasting standard document.

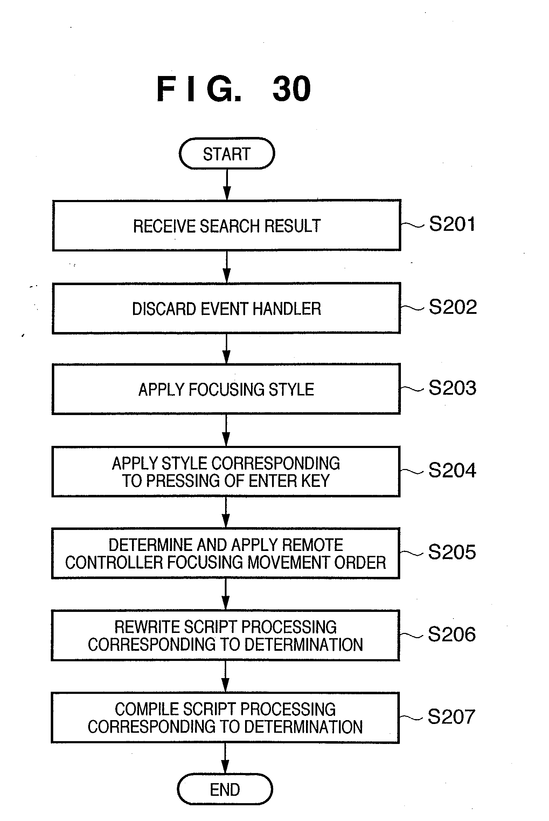

Each element found by the search unit 2922 is identified by an id attribute attached to the element. After completing the search, the search unit 2922 transfers the search result and DOM object data 2911a to a focusing information addition unit 2924. Fig. 30 shows the flow of processing in the focusing information addition unit 2924. The operation of the focusing information addition unit 2924 will be described below with reference to Fig. 30.

In the focusing information addition unit 2924, the DOM object data 2911a is accessed in accordance with DOM-API defined in the data broadcasting standard document, as in the search unit 2922. In step S201, the search result is received from the search unit 2922. In step S202, an event handler attribute attached to each element extracted by the search unit 2922 is discarded.

An event handler is a function defined by using ECMAScript. The event handler attribute designates an event handler to be executed whenever a certain event occurs. The event handler attribute includes an onfocus attribute which is executed when focusing is successful, an onblur attribute which is executed when focusing fails, and an onclick attribute which is executed when a remote controller key for determination (to be referred to as an enter key hereinafter) is pressed.

By discarding the event handler attribute described above, the focusing information addition unit 2924 prevents an image updating process and image changing process by which a displayed image is partially rewritten by an event handler when focusing moves between display objects.

In step S203, focusing style data prepared by the digital broadcasting receiver is applied to each element extracted by the search unit 2922. In this step, the style'data of an element to which the focusing style data is already applied by the broadcasting station is discarded. This focusing style data prepared by the digital broadcasting receiver is desirably the same to all elements so that the viewer can easily visually understand the focused portion.

In step S204, style data to be used when the viewer presses the enter key after performing selection (focusing) by using the remote controller is applied to each element extracted by the search unit 2922..As this style data, style data prepared in the digital broadcasting receiver is used. In this step, the style data of an element to which style data corresponding to pressing of the enter key is already applied by the broadcasting station is discarded. Similar to the focusing style data, the style data prepared by the digital broadcasting receiver and corresponding to pressing of the enter key is desirably the same to all elements so that the viewer can easily visually understand the focused portion.

In step S205, the order of focus movement between the elements extracted by the search unit 2922 is set. Information indicating an element to which focusing moves when an up, down, left, or right arrow key of the remote controller is pressed is described as style data of each element. As this style data, style data prepared by the digital broadcasting receiver is used. In this step, the style data of an element to which style data for focusing movement corresponding to pressing of an arrow key is already applied by the broadcasting station is discarded. In practice, several methods of determining an element to which focusing is to be moved when an arrow key is pressed are possible, and so selected as to provide a visually easy operation to a viewer. For example, when the right arrow key is pressed, focusing is moved to the rightmost display object. A practical focusing movement order determination method is to determine the order'in accordance with the types of elements. For example, focusing is first moved by the left and right arrow keys between div elements by which a plurality of display objects can be collectively focused. To move to a text display object or still image display object, the up or down arrow key is used. Whether focusing is moved between identical elements is determined from coordinates on the screen.

In addition, in step S205, whether focusing can be finally moved to all display objects is checked.

The processing up to this point allows the viewer to select a text and still image in a data broadcasting image for each display object by using the remote controller.

In step S206, an event handler of the onclick attribute of each element extracted by the search unit 2922 is set. The onclick attribute designates an event handler to be executed when the enter key is pressed. To this end, an event handler for extracting image information such as a text and still image selected by the viewer is designated by the onclick attribute. No function of extracting a text and still image is prepared by functions (event handlers) of ECMAScript defined as the data broadcasting standard. Therefore, this extracting function must be prepared in the digital broadcasting receiver.

The event handler of the onclick attribute set in step S206 is compiled again and stored as object data (ECMAScript object data) 2912b in the storage unit 2926 in step S207.

The focusing information addition unit 2924 performs the above processing for the DOM object data 2911a, and stores the result (DOM object data 2911b) in the storage unit 2926.

After the DOM object data 2911b, ECMAScript object data 2912b, and monomedia data 2913b are stored in the storage unit 2926, the viewer uses the remote controller to send a command to switch from the normal data broadcasting image to an image using the various data stored in the storage unit 2926. In response to this command, the digital broadcasting receiver forms image data 2914a by performing drawing by using the data stored in the storage unit 2926. The image data 2914a is supplied to the display 2928 and displayed as a data broadcasting image. This image is used to select and extract display objects such as a text and still image from the normal data broadcasting image. The viewer can select and extract a preferred image region for each display object. In this image, an image changing process performed by executing an event handler in response to focusing movement or pressing of the enter key is not executed.

In this embodiment, after BML document data is stored as object data in the internal memory 2924, this object data is copied, and display elements present in the copied object data are searched for. Additional information for focusing is originally added to each found display element. This allows a viewer to select and extract display objects such as a text and still image displayed in a data broadcasting image by using a remote controller. If a means for editing or printing extracted information is connected to the digital broadcasting receiver, data for data broadcasting including BML document data can be secondarily used, e.g., can be edited or printed.

### [Ninth Embodiment]

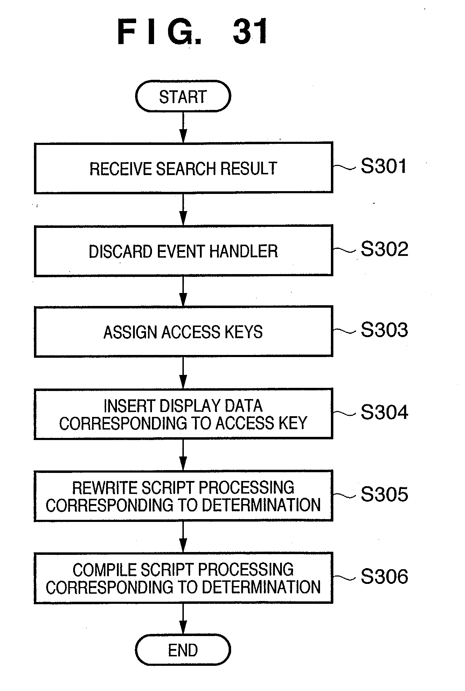

In the eighth embodiment described above, a viewer selects and extracts arbitrary data broadcasting image (display object) by using the arrow keys and enter key. In the ninth embodiment, number keys and color keys are used instead of the arrow keys and enter key. The arrangement of a digital broadcasting receiver and the flow of each data in this embodiment are the same as shown in Fig. 29. However, the internal processing of a focusing information addition unit 2924 differs from that in the eighth embodiment. The operation of the focusing information addition unit 2924 of this embodiment will be explained in detail below with reference to Fig. 31.

In step S301, the search result is received from a search unit 2922. In step S302, an event handler attribute attached to each element extracted by the search unit 2922 is discarded. By discarding these event handler attributes, the focusing information addition unit 2924 prevents an image updating process and image changing process by which a displayed image is partially rewritten by an event handler when focusing moves between display objects.

In step S303, an access key prepared by the digital broadcasting receiver is applied to each element extracted by the search unit 2922. The access key is an identification character corresponding to each key of the remote controller. When a viewer presses a given key of the remote controller, focusing moves to an element having an access key corresponding to the pressed key. At the same time, a script of the element, which corresponds to pressing of an enter key is executed. In the data broadcasting standards, access keys are assigned to color keys and a data button, but no access keys are assigned to number keys of the remote controller. In this embodiment, access keys are also assigned to number keys of the remote controller.

In step S303, the access key of an element to which an access key is already applied by the broadcasting station is discarded. In step S304, display data corresponding to the access key applied in step S303 is inserted in each element extracted by the search unit 2922. In step S305, an event handler of an onclick attribute of each element extracted by the search unit 2922 is set. The onclick attribute designates an event handler to be executed when a remote controller key for determination (to be referred to as an enter key hereinafter) is pressed. To this end, an event handler for extracting image information such as a text and still image selected by the viewer is designated by the onclick attribute. No function of extracting a text and still image is prepared by functions (event handlers) of ECMAScript defined as the data broadcasting standard. Therefore, these extracting functions must be prepared in the digital broadcasting receiver.

The event handler of the onclick attribute set in step S305 is compiled again and stored as object data (ECMAScript object data) 2912b in a storage unit 2926 in step S306.

The focusing information addition unit 2924 performs the above processing for the DOM object data 2911a, and stores the result (DOM object data 2911b) in the storage unit 2926.

After the DOM object data 2911b, the ECMAScript object data 2912b, and monomedia data 2913b are stored in the storage unit 2926, the viewer uses the remote controller to designate switching from the normal data broadcasting image to an image using the various data stored in the storage unit 2926. In response to this, the digital broadcasting receiver forms image data 2914a by performing drawing by using the data stored in the storage unit 2926. The image data 2914a is supplied to the display 2928 and displayed as a data broadcasting image. This image is used to select and extract display objects such as a text and still image from the normal data broadcasting image. Display objects are displayed with remote controller number keys corresponding to access keys. The viewer can select and extract a preferred image region for each display object by pressing a remote controller number key corresponding to the number of the display object. In this image, an image changing process performed by executing an event handler in response to focusing movement or pressing of the enter key is not executed.

### [10th Embodiment]

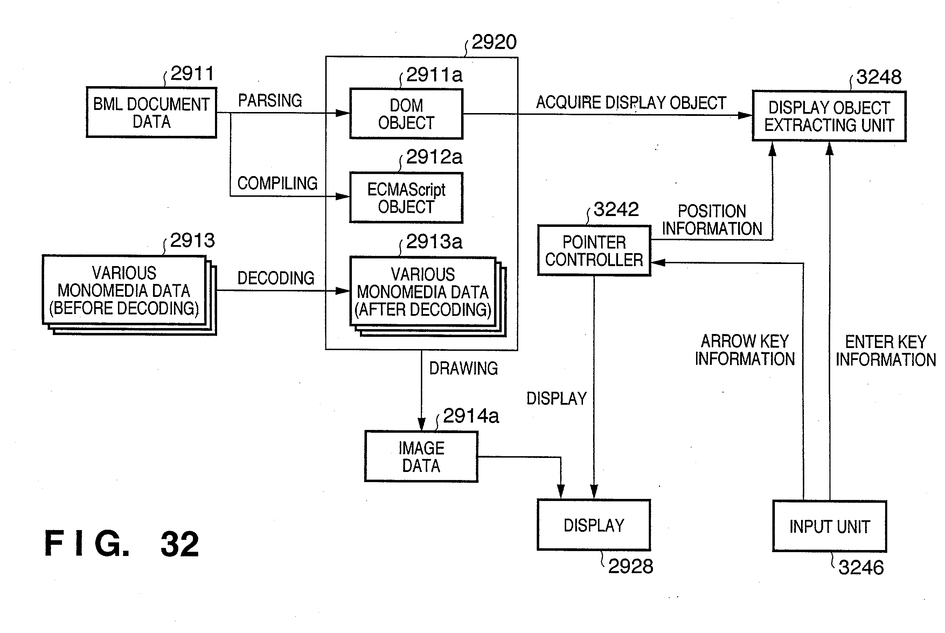

Fig. 32 is a functional block diagram of a digital broadcasting receiver according to the 10th embodiment. Similar to Fig. 29, data shown in Fig. 32 is obtained by separating only data for data broadcasting from digital broadcasting data such as an MPEG stream and program information (EPG). This data for data broadcasting includes BML document data 2911 and various monomedia data 2913. The BML document data 2911 contains style data described in CSS (Cascading Style Sheet) and script data described in ECMAScript.

After being parsed, the BML document data 2911 is stored as object data (DOM object data) 2911a in an internal memory 2920. At the same time, the style data described in CSS is also stored in the internal memory 2920. Only the script data described in ECMAScript is once compiled and then stored as object data (EXMAScript object data) 2912a in the internal memory 2920.

Simultaneously, the various monomedia data 2913 are decoded by corresponding decoders (not shown), and decoded monomedia data 2913a are stored in the internal memory 2920.

A normal data broadcasting program performs a drawing process by using the data stored in the internal memory 2920, and forms image data 2914a. The formed image data 2914a is transferred to a display 2928 and presented as a data broadcasting image to a viewer.

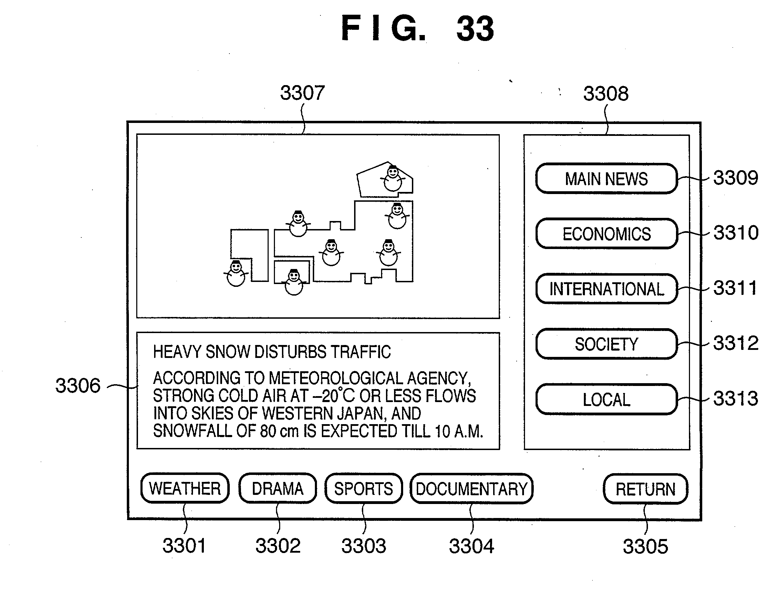

Fig. 33 shows an example of a data broadcasting image in this embodiment. This data broadcasting image mainly includes display objects such as still images 3301 to 3305 and 3309 to 3313, a motion image 3307, and characters 3306. A display object 3308 is represented by div elements and internally has a plurality of display objects. In this example, the display object 3308 displays the still images 3309 to 3313 as objects in a rectangular region. In the data broadcasting program image shown in Fig. 33, of all the display objects described above, only display objects displaying elements to which information for focusing is added by the broadcasting station can be selected.

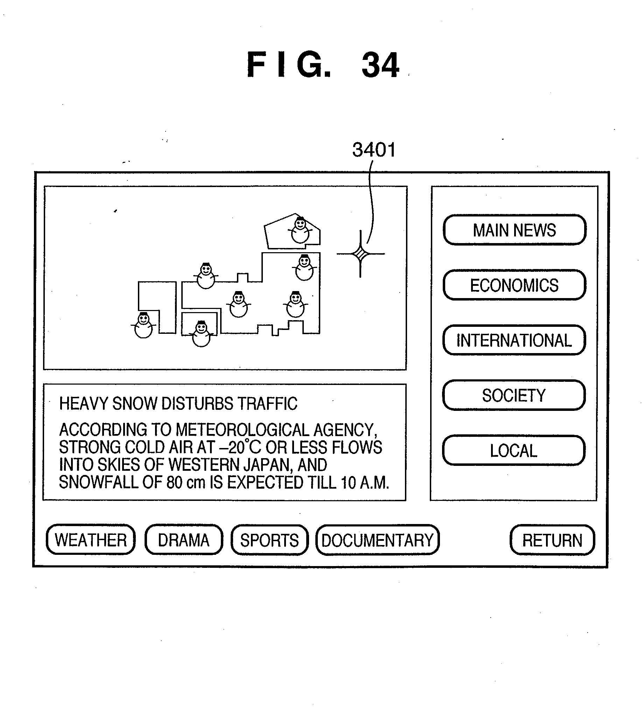

In this embodiment, when the series of presentation processes described above are complete or when a remote control input signal is received from the viewer after the presentation processes are completed, a pointer controller 3242 displays a pointer 3401 on the image data as shown in Fig. 34. Fig. 34 shows a data broadcasting image in which the pointer 3401 is displayed. This data broadcasting image itself is the same as shown in Fig. 33 except that the pointer 3401 is displayed on the image.

Normally, when any of left, right, up, and down arrow keys of a remote controller is pressed, focusing in a data broadcasting image moves. In this embodiment, however, the arrow keys of the remote controller are used to move the pointer 3401 while the pointer 3401 is displayed.

More specifically, when the viewer presses an arrow key, information indicating the key type, i.e., one of left, right, up, and down, and the time of pressing is supplied from an input unit 3246 to the pointer controller 3242. Also, when the viewer releases a remote controller arrow key, corresponding time information is supplied. On the basis of this information, the pointer controller 3242 moves the pointer 3401 to the designated position or in the designated direction. In the pointer controller 3242, the moving amount of the pointer 3401, which corresponds to the time during which the key is pressed by a viewer is set in advance, and this moving amount increases in proportion to the time during which the key is pressed by a viewer. Also, the pointer controller 3242 starts moving the pointer in the direction of a designated arrow key immediately after a viewer presses the key, and stops the pointer the moment the viewer releases the key. Therefore, the moving amount of the pointer 3401 is desirably set in units of milliseconds.

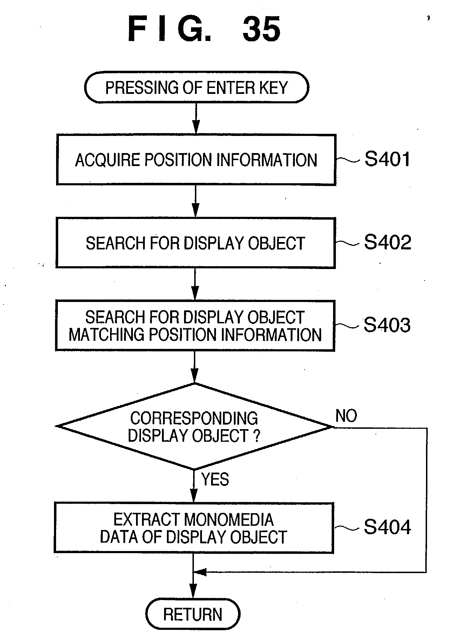

When the viewer moves the pointer 3401 onto a display object such as a still image or characters in the data broadcasting image and presses the enter key, the input unit 3246 issues an event indicating the pressing of the enter key to a display object extracting unit 3248. The display object extracting unit 3248 receives this event from the input unit 3246 and performs processing shown in Fig. 35, thereby extracting the display object selected by the pointer 3401.

In step S401 of Fig. 35, the display object extracting unit 3248 acquires, from the pointer controller 3242, position information of the pointer 3401 on the displayed image when the enter key is pressed. For example, the position information is represented by orthogonal coordinate values in the horizontal and vertical directions from the upper left corner of the screen. In step S402, the display object extracting unit 3248 accesses the DOM object data 2911a in the internal memory 2920, and searches for the display object. In BML, display objects are represented by div elements, p elements, object elements, input elements, span elements, anchor elements, and the like. Search methods are a method of searching these elements in order of appearance in BML document data, and a method of searching each of these elements. The DOM object data 2911a is accessed in accordance with DOM-API defined in a data broadcasting standard document. Each found element is identified by an id attribute attached to the element.

When the search in step S402 is complete, the flow advances to step S403 to specify the display object selected by the pointer 3401 from the position information and search result described above. The DOM object data 2911a holds information indicating the display position and size of each display object. Since a region in which each display object is drawn in the image is known, a corresponding display object can be specified by comparing this information with the above position information.

If a corresponding display object is found in step S403, the flow advances to step S404 to extract monomedia data (e.g., a text and still image) which the corresponding display object holds. If no corresponding display object can be found, the flow returns without performing anything.

In this embodiment, the image data 2914a is formed and displayed as a data broadcasting image by using BML document data stored as DOM object data in the internal memory 2920. After that, the pointer controller 3242 displays the pointer 3401 on the image data. When a viewer designates a certain point on the image data by the pointer 3401 after that, the pointer controller 3242 transfers the position information to the display object extracting unit 3248. On the basis of this position information and the DOM object data described above, the display object extracting unit 3248 specifies the display object selected by the viewer, and extracts the monomedia data. This processing allows the viewer to select and extract a display object such as a text or still image displayed in a data broadcasting image by using a remote controller. If the digital broadcasting receiver has a means for editing or printing extracted information, data for data broadcasting including BML document data can be secondarily used, e.g., can be edited or printed.

### [11th Embodiment]

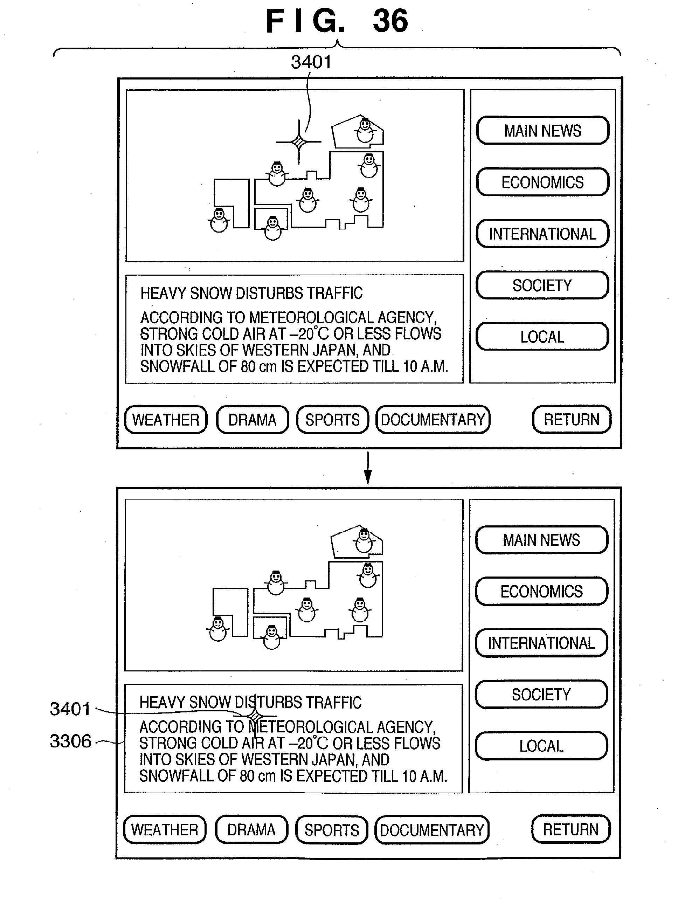

The 11th embodiment of the present invention will be described below. In this embodiment, as shown in Fig. 36, when a viewer presses an arrow key while a pointer 3401 is displayed, the pointer 3401 automatically selects a display object in the direction indicated by the key. Fig. 36 shows an example in which when a viewer presses a down arrow key of a remote controller while the pointer 3401 is displayed, the pointer 3401 moves to a display object 3306 which is a text positioned below.

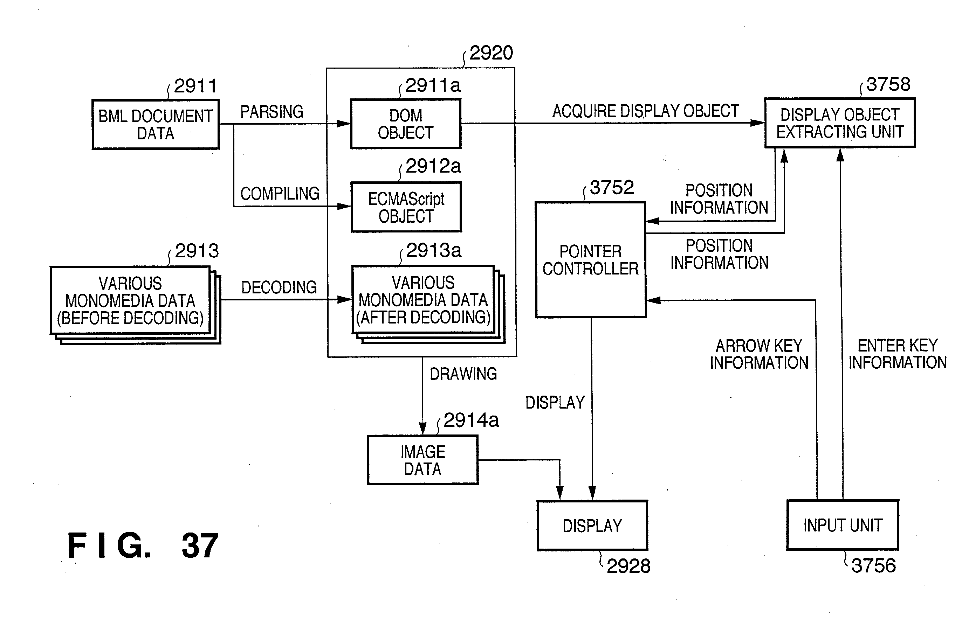

Fig. 37 is a functional block diagram of a digital broadcasting receiver according to the 11th embodiment. In Fig. 37, the same reference numerals as in the embodiment shown in Fig. 32 denote components having the same functions. A process of presenting a data broadcasting image and then displaying the pointer 3401 on the image data, and processing performed by a display object extracting unit 3758 when an enter key of the remote controller is pressed while the pointer 3401 is displayed, are the same as in the embodiment shown in Fig. 32.

Processing different from the eighth to 10th embodiments described above, i.e., processing performed when arrow keys of the remote controller are pressed while the pointer is displayed will be explained below.

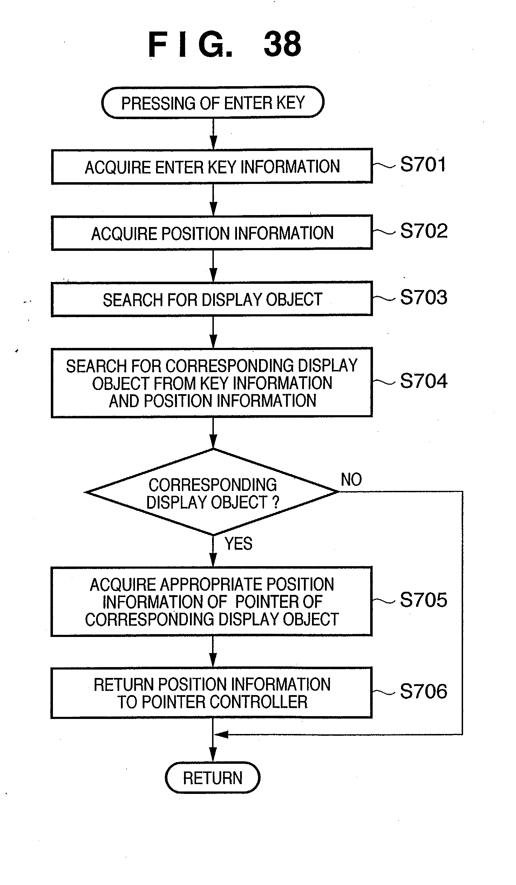

When a viewer presses any of the left, right, up, and down arrow keys of the remote controller while the pointer is displayed, information indicating the key type, i.e., one of left, right, up, and down is supplied from an input unit 3756 to a display object extracting unit 3758. The display object extracting unit 3758 receives this key type information from the input unit 3756, and executes processing shown in Fig. 38.

Referring to Fig. 38, in step S701, the display object extracting unit 3758 receives the key information. In step S702, the display object extracting unit 3758 acquires current position information of the pointer 3401 from a pointer controller 3752. The position information is represented by orthogonal coordinate values in the horizontal and vertical directions from the upper left corner of the screen. In step S703, the display object extracting unit 3758 accesses DOM object data 2911a in an internal memory 2920, and searches for the display object. In BML, display objects are represented by div elements, p elements, object elements, input elements, span elements, anchor elements, and the like. Search methods are a method of searching these elements in order of appearance in BML document data, and a method of searching each of these elements. The DOM object data 2911a is accessed in accordance with DOM-API defined in a data broadcasting standard document. Each found'element can be identified by an id attribute attached to the element.

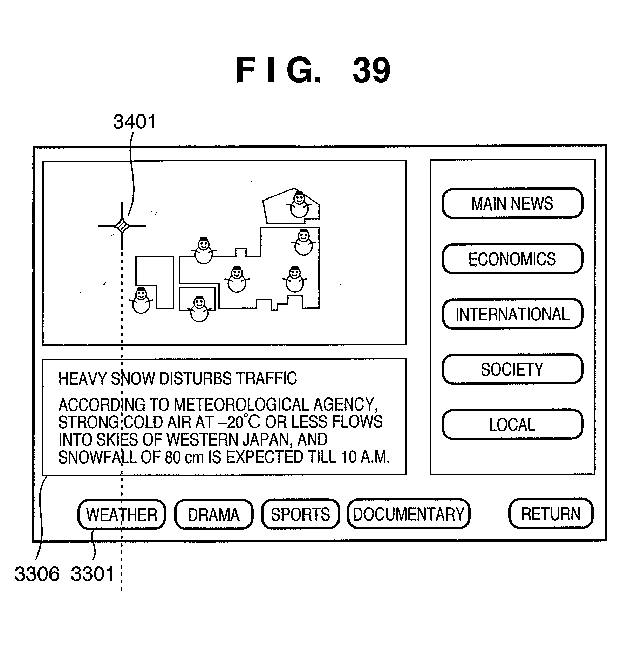

When the search in step S703 is complete, the flow advances to step S704. In step S704, in accordance with the position information and key information described above, a display object which intersects a straight line drawn from the position of the pointer 3401 in the direction in which the key is pressed is extracted from the search result. Fig. 39 shows an example of this process. When the viewer presses the down arrow key of the remote controller, a display object which intersects a straight line (broken line) drawn down from the position of the pointer 3401 is extracted. Referring to Fig. 39, a text display object 3306 and still image display object 3301 intersect a straight line. Since the DOM object data 2911a holds information indicating the display position and size of each display object, a region in which each display object is drawn in the image is known. If a plurality of corresponding display objects are present, one display object closest to the pointer 3401 is selected. Also, as shown in Fig. 39, since a div element capable of having a plurality of display objects such as texts and images is processed as a display object, a div element is selected in this case. If the pointer 3401 is originally present on a certain display object, this display object is excluded from objects of selection. Only when the pointer 3401 is present on a display object represented by a div element, individual display objects within this div element can be selected.

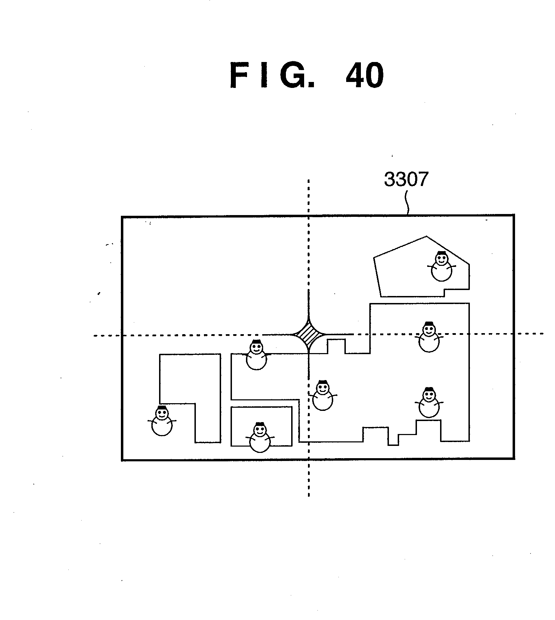

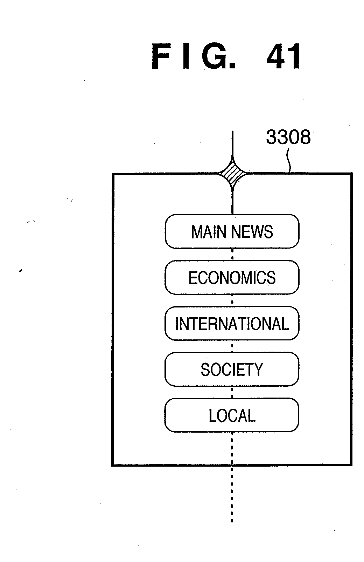

If a corresponding display object is found in step S704, the flow advances to step S705 to acquire appropriate position information of an image region occupied by this display object. For example, for a still image display object 3307 shown in Fig. 40, the coordinates of the center of the object are acquired as position information. On the other hand, if a plurality of display objects are contained in another display object such as a div element, as shown in Fig. 41, an appropriate point on a side of a rectangular region indicated by the div element is desirably acquired as position information.

In step S706, the position information is transferred to the pointer controller 3752. The pointer controller 3752 receives the position information from the display object extracting unit 3758, and moves the pointer 3401 to the position indicated by the position information.

The above processing allows the viewer to select a specific display object by only pressing an arrow key of the remote controller once. If no corresponding display object is found in step S704, the flow returns without performing anything.

When the viewer selects a display object by the above processing and presses the enter key, as in the 10th embodiment, monomedia data indicated as the display object by the processing shown in Fig. 35 is extracted.

In each of the 10th and 11th embodiments described above, a digital broadcasting receiver capable of receiving data broadcasting and changing focusing in a data broadcasting image in accordance with input information from a remote controller provides a method by which a pointer movable by the remote controller is displayed on a presented data broadcasting program image, and a viewer selects a display object on the image by moving the pointer onto the display object. Consequently, the viewer can select arbitrary image information for each display object.

The above embodiments have described receiving a digital broadcasting, however, the invention is not limited to this. When the website described in markup language such as HTML also is browsed for instance with the television broadcasting receiver, the invention is effective.

### [Other Embodiments]

Note that the present invention can be applied to an apparatus comprising a single device or to system constituted by a plurality of devices.

Furthermore, the invention can be implemented by supplying a software program, which implements the functions of the foregoing embodiments, directly or indirectly to a system or apparatus, reading the supplied program code with a computer of the system or apparatus, and then executing the program code. In this case, so long as the system or apparatus has the functions of the program, the mode of implementation need not rely upon a program.

Accordingly, since the functions of the present invention are implemented by computer, the program code itself installed in the computer also implements the present invention. In other words, the claims of the present invention also cover a computer program for the purpose of implementing the functions of the present invention.

In this case, so long as the system or apparatus has the functions of the program, the program may be executed in any form, e.g., as object code, a program executed by an interpreter, or scrip data supplied to an operating system.

Example of storage media that can be used for supplying the program are a floppy disk, a hard disk, an optical disk, a magneto-optical disk, a CD-ROM, a CD-R, a CD=RW, a magnetic tape, a non-volatile type memory card, a ROM, and a DVD (DVD-ROM and a DVD-R).

As for the method of supplying the program, a client computer can be connected to a website on the Internet using a browser of the client computer, and the computer program of the present invention or an automatically-installable compressed file of the program can be downloaded to a recording medium such as a hard disk. Further, the program of the present invention can be supplied by dividing the program code constituting the program into a plurality of files and downloading the files from different websites. In other words, a WWW (World Wide Web) server that downloads, to multiple users, the program files that implement the functions of the present invention by computer is also covered by the claims of the present invention.

Further, it is also possible to encrypt and store the program of the present invention on a storage medium such as a CD-ROM, distribute the storage medium to users, allow users who meet certain requirements to download decryption key information from a website via the Internet, and allow these users to decrypt the encrypted program by using the key information, whereby the program is installed in the user computer.

Furthermore, besides the case where the aforesaid functions according to the embodiments are implemented by executing the read program by computer, an operating system or the like running on the computer may perform all or a part of the actual processing so that the functions of the foregoing embodiments can be implemented by this processing.

Furthermore, after the program read from the storage medium is written to a function expansion board inserted into the computer or to a memory provided in a function expansion unit connected to the computer, a CPU or the like mounted on the function expansion board or function expansion unit performs all or a part of the actual processing so that the functions of the foregoing embodiments can be implemented by this processing.

As can be seen from the foregoing description, according to each embodiment, a desired display object can be selected in a displayed image by a few key input operations. Also, all display objects on the screen can be selected, and arbitrary processing can be executed for a selected display object.

As many apparently widely different embodiments of the present invention can be made without departing from the spirit and scope thereof, it is to be understood that the invention is not limited to the specific embodiments thereof except as defined in the appended claims.

## Claims

1. An information processing apparatus for receiving data described in a markup language and including first hierarchical level elements delimited by predetermined tags and second hierarchical level elements which belong to a range delimited by the predetermined tags, and displaying the received data on a display device, **characterized by** comprising:
receiving unit adapted to receive key-input first or second signals;
switching unit adapted to switch selection between the first hierarchical level elements or between the second hierarchical level elements when the first signal is received, and switching selection between the first and second hierarchical level elements when the second signal is received.

2. The apparatus according to claim 1, **characterized in that** the data described in a markup language is a digital broadcasting data.

3. The apparatus according to claim 1, further comprising:
selected element display unit adapted to display the selected element on said display device,
wherein if the selected element is a first hierarchical level element, said selected element display unit highlights all the first hierarchical level elements.

4. The apparatus according to claim 1, further comprising:
selected element display unit adapted to display the selected element on said display device,
wherein when the first or second signal is received, said selected element display unit highlights an element to be selected.

5. An information processing apparatus for receiving data described in a markup language and including a plurality of elements delimited by predetermined tags, and displaying the received data on a display device, **characterized by** comprising:
identifying unit adapted to identify an information amount contained in each of said plurality of elements;
receiving unit adapted to receive a key-input signal;
switching unit adapted to, when the signal is received, switch selection between said plurality of elements on the basis of the information amount of each element identified by said identifying unit.

6. An information processing apparatus for receiving data described in a markup language and including first hierarchical level elements delimited by predetermined tags and second hierarchical level elements which belong to a range delimited by the predetermined tags, and displaying the received data on a display device, **characterized by** comprising:
identifying unit adapted to identify an information amount contained in each of the elements;
receiving unit adapted to receive key-input first or second signals;
switching unit adapted to switch selection between the first hierarchical level elements or between the second hierarchical level elements when the first signal is received, on the basis of the identified information amount, and switching selection between the first and second hierarchical level elements when the second signal is received.

7. The apparatus according to claim 5 or 6, **characterized in that** the data described in a markup language is a digital broadcasting data.

8. The apparatus according to claim 5 or 6, **characterized in that** the information amount contained in each element is an area when the element is displayed.

9. The apparatus according to claim 5 or 6, **characterized in that** the information amount contained in each element is the number of characters contained in the element.

10. The apparatus according to claim 5 or 6, **characterized in that** the information amount contained in each element is the number of bytes of data contained in the element.

11. An information processing method of displaying, on a display device, data described in a markup language and including first hierarchical level elements delimited by predetermined tags and second hierarchical level elements which belong to a range delimited by the predetermined tags, **characterized by** comprising:
a receiving step of receiving key-input first or second signals;
a switching step of switching selection between the first hierarchical level elements or between the second hierarchical level elements when the first signal is received, and switching selection between the first and second hierarchical level elements when the second signal is received; and
a selected element display step of displaying the selected element on the display device.

12. The method according to claim 11, **characterized in that** the data described in a markup language is a digital broadcasting data.

13. The method according to claim 11, **characterized in that** if the selected element is a first hierarchical level element, the selected element display step highlights all the first hierarchical level elements.

14. The method according to claim 11, **characterized in that** when the first or second signal is received, the selected element display step highlights an element to be selected.

15. An information processing method of receiving data described in a markup language and including a plurality of elements delimited by predetermined tags, and displaying the received data on a display device, **characterized by** comprising:
an identification step of identifying an information amount contained in each of the plurality of elements;
a receiving step of receiving a key-input signal;
a switching step of, when the signal is received, switching selection between the plurality of elements on the basis of the information amount of each element identified by the identifying step; and
a selected element display step of displaying the selected element on the display device.

16. An information processing method of receiving data described in a markup language and including first hierarchical level elements delimited by predetermined tags and second hierarchical level elements which belong to a range delimited by the predetermined tags, and displaying the received data on a display device, **characterized by** comprising:
an identification step of identifying an information amount contained in each of the elements;
a receiving step of receiving key-input first or second signals;
a switching step of switching selection between the first hierarchical level elements or between the second hierarchical level elements on the basis of the identified information amount when the first signal is received, and switching selection between the first and second hierarchical level elements when the second signal is received; and
a selected element display step of displaying the selected element on the display device.

17. The method according to claim 15 or 16, **characterized in that** the data described in a markup language is a digital broadcasting data.

18. The method according to claim 15 or 16, **characterized in that** the information amount contained in each element is an area when the element is displayed.

19. The method according to claim 15 or 16, **characterized in that** the information amount contained in each element is the number of characters contained in the element.

20. The method according to claim 15 or 16, **characterized in that** the information amount contained in each element is the number of bytes of data contained in the element.

21. A control program for allowing a computer to implement an information processing method cited in any one of claims 11 to 20.

22. An information processing apparatus for receiving data described in a markup language, and displaying an object on a display device, **characterized by** comprising:
searching unit adapted to search the received data for a display element described as a selectable display object;
attribute information adding unit adapted to add, to the display element found by said searching unit, attribute information indicating whether the element is selectable; and
display unit adapted to display, on said display device, the data to which the attribute information is added, in the form of an object.

23. The apparatus according to claim 22, **characterized in that** the data described in a markup language is a digital broadcasting data.

24. The apparatus according to claim 23, **characterized in that** the data is described in BML.

25. The apparatus according to any one of claims 22 to 24, **characterized by** further comprising storage unit adapted to store, as object data, the data to which the attribute information is added.

26. The apparatus according to claim 24, **characterized in that** said searching unit performs search by using one of a p element, object element, div element, input element, span element, and anchor element as a keyword.

27. The apparatus according to claim 26, **characterized in that** said attribute information adding unit discards an event handler set for each of the display elements found by said searching unit, sets a style for selection, and at the same time sets an order of switching of selection between the display elements.

28. The apparatus according to claim 26, **characterized in that** said attribute information adding unit discards an event handler set for each of the display elements found by said searching unit, assigns an access key corresponding to a predetermined key number, and inserts, in each of the display elements, display data for displaying a number.

29. An information processing apparatus for receiving data described in a markup language, and displaying an object on a display device, **characterized by** comprising:
storage unit adapted to store the received data;
pointer control unit adapted to display a pointer on said display device;
designating unit adapted to designate an arbitrary position by moving the displayed pointer; and
extracting unit adapted to search the data stored in said storage unit for a display element corresponding to a display object in the position designated by said designating unit, and extracting the display element.

30. The apparatus according to claim 29, **characterized in that** the data described in a markup language is a digital broadcasting data.

31. An information processing method of receiving data described in a markup language, and displaying an object on a display device, **characterized by** comprising:
a search step of searching the received data for a display element described as a selectable display object;
an attribute information addition step of adding, to the display element found in the search step, attribute information indicating whether the element is selectable; and
a display step of displaying, on the display device, the data to which the attribute information is added, in the form of an object.

32. The method according to claim 31, **characterized in that** the data described in a markup language is a digital broadcasting data.

33. The method according to claim 32, **characterized in that** the data is described in BML.

34. The method according to any one of claims 31 to 33, **characterized by** further comprising a storage step of storing, as object data, the data to which the attribute information is added.

35. The method according to claim 33, **characterized in that** the search step performs search by using one of a p element, object element, div element, input element, span element, and anchor element as a keyword.

36. The method according to claim 35, **characterized in that** the attribute information addition step discards an event handler set for each of the display elements found in the search step, sets a style for selection, and at the same time sets an order of switching of selection between the display elements.

37. The method according to claim 35, **characterized in that** the attribute information addition step discards an event handler set for each of the display elements found in the search step, assigns an access key corresponding to a predetermined key number, and inserts, in each of the display elements, display data for displaying a number.

38. An information processing method of receiving data described in a markup language, and displaying an object on a display device, **characterized by** comprising:
a storage step of storing the received data;
a pointer control step of displaying a pointer on the display device;
a designation step of designating an arbitrary position by moving the displayed pointer; and
an extraction step of searching the digital broadcasting data stored in the storage step for a display element corresponding to a display object in the position designated in the designation step, and extracting the display element.

39. The information processing method according to claim 38, **characterized in that** the data described in a markup language is a digital broadcasting data.

40. A control program for allowing a computer to implement an information processing method cited in any one of claims 31 to 39.
